(19) Europäisches Patentamt
European Patent Office
Office européen des brevets

(11) **EP 4 572 413 A1**

(12) **EUROPEAN PATENT APPLICATION**
published in accordance with Art. 153(4) EPC

(43) Date of publication:
**18.06.2025 Bulletin 2025/25**

(21) Application number: **23761746.9**

(22) Date of filing: **16.03.2023**

(51) International Patent Classification (IPC):
*H04W 48/18* (2009.01)    *H04W 24/02* (2009.01)
*H04W 24/08* (2009.01)    *H04W 24/10* (2009.01)
*G06N 20/00* (2019.01)    *H04W 88/06* (2009.01)

(52) Cooperative Patent Classification (CPC):
**G06N 20/00; H04W 24/02; H04W 24/08;
H04W 24/10; H04W 48/18; H04W 88/06**

(86) International application number:
**PCT/KR2023/003535**

(87) International publication number:
**WO 2024/034763 (15.02.2024 Gazette 2024/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.08.2022  US 202263395872 P**

(71) Applicant: **LG ELECTRONICS, INC.
Seoul 07336 (KR)**

(72) Inventors:
• **KIM, Sunhee**
  **Seoul 06772 (KR)**
• **KIM, Hyun Sook**
  **Seoul 06772 (KR)**
• **YOUN, Myungjune**
  **Seoul 06772 (KR)**

(74) Representative: **Maikowski & Ninnemann
Patentanwälte Partnerschaft mbB
Postfach 15 09 20
10671 Berlin (DE)**

(54) **TERMINAL OPERATION METHOD AND DEVICE IN WIRELESS COMMUNICATION SYSTEM**

(57)    Disclosed herein is a method for operating a node in a wireless communication system, and the method may include determining whether or not a terminal registered to a network is a first type terminal, based on the terminal being the first type terminal, determining to collect terminal measurement information and measured cell information, transmitting an indication to collect the terminal measurement information and the measured cell information to the terminal, receiving the measurement information and the measured cell information which are measured by the terminal, based on the obtained measurement information and the measured cell information, determining whether or not to use a signal threshold and the signal threshold, and transmitting the determined signal threshold to the terminal.

**FIG. 10**

## Description

### Technical Field

The present disclosure relates to a wireless communication system and, more particularly, to a method of operating a terminal. In particular, the present disclosure relates to a method for performing network selection based on a signal level.

### Background Art

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

In particular, as a large number of communication devices require a large communication capacity, the enhanced mobile broadband (eMBB) communication technology, as compared to the conventional radio access technology (RAT), is being proposed. In addition, not only massive machine type communications (massive MTC), which provide a variety of services anytime and anywhere by connecting multiple devices and objects, but also a communication system considering a service/user equipment (UE) sensitive to reliability and latency is being proposed. Various technical configurations for this are being proposed.

### Disclosure

### Technical Problem

The present disclosure relates to a method and device for performing network selection based on a signal level of a wireless communication system.

The present disclosure relates to a method and device for determining an operator controlled signal threshold per access technology for network selection based on a signal level of a wireless communication system.

The present disclosure relates to a method and device for acquiring measurement information for determining a signal threshold for network selection based on a signal level of a wireless communication system.

The present disclosure relates to a method and device for acquiring cell information for which measurement is performed to determine a signal threshold for network selection based on a signal level of a wireless communication system.

Technical objects to be achieved in the present disclosure are not limited to what is mentioned above, and other technical objects not mentioned therein can be considered from the embodiments of the present disclosure to be described below by those skilled in the art to which a technical configuration of the present disclosure is applied.

### Technical Solution

The present disclosure a method for operating a node in a wireless communication system, the method comprising: determining whether a terminal registered to a network is a first type terminal, determining to collect terminal measurement information and measured cell information based on the terminal being the first type terminal, transmitting an indication to collect the terminal measurement information and the measured cell information to the terminal, receiving the measurement information and the measured cell information which are measured by the terminal, determining whether to use a signal threshold and the signal threshold based on the obtained measurement information and the measured cell information, and transmitting the determined signal threshold to the terminal.

The present disclosure a node operating in a wireless communication system, the node comprising: at least transceiver, at least one processor, and at least one memory operably coupled with the at least one processor and storing instructions which make the at least one processor perform a specific operation when executed, wherein the specific operation is configured to: determine whether or not a terminal registered to a network is a first type terminal, determine to collect terminal measurement information and measured cell information based on the terminal being the first type terminal, control the at least one transceiver to transmit an indication to collect the terminal measurement information and the measured cell information to the terminal, control the at least one transceiver to receive the measurement information and the measured cell information which are measured by the terminal, determine whether to use a signal threshold and the signal threshold based on the obtained measurement information and the measured cell information, and control the at least one transceiver to transmit the determined signal threshold to the terminal.

The present disclosure a method for operating a terminal in a wireless communication system, the method comprising: being registered to a network, receiving an indication to collect terminal measurement information and measured cell information, obtaining the terminal measurement information and the measured cell information based on the indication to collect, transmitting the measurement information and the measured cell information, receiving a signal threshold determined based on the measurement information and the measured cell information, and selecting a PLMN based on the signal threshold and camping in a cell.

The present disclosure a terminal operating in a wireless communication system, the terminal comprising: at least transceiver, at least one processor, and at least one memory operably coupled with the at least one processor and storing instructions which make the at least one processor perform a specific operation when executed, wherein the specific operation is configured to: register to a network, control the at least one transceiver to receive an indication to collect terminal measurement information and measured cell information, obtain the terminal measurement information and the measured cell information based on the indication to collect, control the at least one transceiver to transmit the measurement information and the measured cell information, control the at least one transceiver to receive a signal threshold determined based on the measurement information and the measured cell information, and select a PLMN based on the signal threshold and camp in a cell.

The present disclosure a device comprising at least one memory and at least one processor functionally coupled with the at least one memory, wherein the at least one processor controls the device to: determine whether a terminal registered to a network is a first type terminal, determine to collect terminal measurement information and measured cell information based on the terminal being the first type terminal, transmit an indication to collect the terminal measurement information and the measured cell information to the terminal, receive the measurement information and the measured cell information which are measured by the terminal, determine whether to use a signal threshold and the signal threshold based on the obtained measurement information and the measured cell information, and transmit the determined signal threshold to the terminal.

The present disclosure a non-transitory computer-readable medium storing at least one instruction, the medium comprising the at least one instruction executable by a processor, wherein the at least one instruction controls the device to: determine whether a terminal registered to a network is a first type terminal, determine to collect terminal measurement information and measured cell information based on the terminal being the first type terminal, transmit an indication to collect the terminal measurement information and the measured cell information to the terminal, receive the measurement information and the measured cell information which are measured by the terminal, determine whether to use a signal threshold and the signal threshold based on the obtained measurement information and the measured cell information, and transmit the determined signal threshold to the terminal.

In addition, the following items can be applied in common.

The present disclosure the node is a node with an analytic function, and wherein the node is a node with either a network data analytics function (NWDAF) or artificial intelligence/machine learning (AI/ML).

The present disclosure the signal threshold is an operator controlled signal threshold per access technology based on signal level-based network selection.

The present disclosure the terminal selects a PLMN with a high priority among public land mobile networks (PLMNs) having signals above the signal threshold and be camped in a cell within the selected PLMN.

The present disclosure the first type terminal is a stationary internet of things (IoT) terminal, and wherein the node determines whether the terminal is the first type terminal based on at least one of terminal type indication information and terminal subscription information.

The present disclosure, based on a cell selection criterion being not satisfied for a preset time based on a signal intensity of a PLMN cell with a higher priority than a currently registered PLMN of the terminal, the node determines to collect the terminal measurement information and the measured cell information and configures the signal threshold.

The present disclosure the terminal measurement information is cell-measured result information and is determined based on at least one of a reference signal received power (RSRP), a reference signal received quality (RSRQ), a signal to noise and interference ratio (SINR), a received signal strength indicator (RSSI), and other measurement information.

The present disclosure information on a cell in which the measurement is performed includes at least one of a cell ID, a PLMN ID, a frequency of the cell, a cell measurement result, a priority, a location, cell selection criterion information, Srxlev of the cell calculated by the terminal, Squal of the cell calculated by the terminal, Qrxlevmin received by the terminal, Qqualmin received by the terminal, and Qoffsettemp received by the terminal.

The present disclosure the terminal measurement information and the measured cell information are forwarded to the node based on non access stratum (NAS) signaling on a control plane.

The present disclosure the terminal establishes a protocol data unit (PDU) session and forwards the terminal measurement information and the measured cell information to the node through a user plane based on the PDU session.

The present disclosure, based on the indication to collect the terminal measurement information and the measured cell information being transmitted to the terminal, preset time information is forwarded to the terminal together, and wherein the terminal performs measurement based on the preset time information and obtains the terminal measurement information and the measured cell information.

The present disclosure the signal threshold is configured and indicated for each terminal based on terminal location information.

## Advantageous Effects

The present disclosure can provide a method for performing network selection based on a signal level of a wireless communication system.

The present disclosure can provide a method for determining an operator controlled signal threshold per access technology for network selection based on a signal level of a wireless communication system.

The present disclosure can provide a method for acquiring measurement information for determining a signal threshold for network selection based on a signal level of a wireless communication system.

The present disclosure can provide a method for acquiring cell information for which measurement is performed to determine a signal threshold for network selection based on a signal level of a wireless communication system.

Technical objects to be achieved in the present disclosure are not limited to what is mentioned above, and other technical objects not mentioned therein can be considered from the embodiments of the present disclosure to be described below by those skilled in the art to which a technical configuration of the present disclosure is applied.

Effects obtained in the present disclosure are not limited to the above-mentioned effects, and other effects not mentioned above may be clearly derived and understood by those skilled in the art, to which a technical configuration of the present disclosure is applied, from the following description of embodiments of the present disclosure. That is, effects, which are not intended when implementing a configuration described in the present disclosure, may also be derived by those skilled in the art from the embodiments of the present disclosure.

## Description of Drawings

The accompanying drawings are provided to aid understanding of the present disclosure, and embodiments of the present disclosure may be provided together with a detailed description. However, the technical features of the present disclosure are not limited to a specific drawing, and features disclosed in each drawing may be combined with each other to constitute a new embodiment. Reference numerals in each drawing may mean structural elements.

FIG. 1 is a view showing an example communication system applicable to the present disclosure.

FIG. 2 shows an example of UE to which an implementation of the present specification is applied.

FIG. 3 is a view illustrating an example of functional separation of a typical NG-RAN and a 5th generation core (5GC).

FIG. 4 is a view illustrating an example of a typical architecture of a 5G system.

FIG. 5 is a view showing a method in which a terminal applicable to the present disclosure receives a PLMN list based on SOR during a process of registering to a VPLMN.

FIG. 6 is a view showing a method of updating a list of preferred PLMN/access technology combinations applicable to the present disclosure.

FIG. 7 may be an operation based on an AI/ML model applicable to the present disclosure.

FIG. 8 may be an operation based on an AI/ML model applicable to the present disclosure.

FIG. 9 is a view showing a method of collecting terminal-related information applicable to the present disclosure.

FIG. 10 is a view showing a method of collecting terminal-related information applicable to the present disclosure.

FIG. 11 is a flowchart showing a node operation applicable to the present disclosure.

FIG. 12 is a flowchart showing an operation of a terminal applicable to the present disclosure.

## Mode for Invention

Following embodiments are achieved by combination of structural elements and features of the present disclosure in a predetermined manner. Each of the structural elements or features should be considered selectively unless specified separately. Each of the structural elements or features may be carried out without being combined with other structural elements or features. Also, some structural elements and/or features may be combined with one another to constitute the embodiments of the present disclosure. The order of operations described in the embodiments of the present disclosure may be changed. Some structural elements or features of one embodiment may be included in another embodiment, or may be replaced with corresponding structural elements or features of another embodiment.

In the description of the drawings, procedures or steps which render the scope of the present disclosure unnecessarily ambiguous will be omitted and procedures or steps which can be understood by those skilled in the art will be omitted.

In the entire specification, when a certain portion "comprises" or "includes" a certain component, this indicates that the other components are not excluded, but may be further included unless specially described. The terms "unit", "-or/er" and "module" described in the specification indicate a unit for processing at least one function or operation, which may be implemented by hardware, software and a combination thereof. In addition, "a or an", "one", "the" and similar related words may be used as the sense of including both a singular representation and a plural representation unless it is indicated in the context describing the present specification (especially in the context of the following claims) to be different from this specification or is clearly contradicted by the context.

In this specification, the embodiments of the present disclosure are described with focus on the relationship of data reception and transmission between a base station and a mobile station. Herein, the base station means a terminal node of a network that performs direct communication with the mobile station. In this document, a specific operation, which is described to be performed by a base station, may be performed by an upper node of the base station in some cases.

That is, in a network consisting of a plurality of network nodes including a base station, various operations for communicating with a mobile station may be performed by the base station or network nodes other than the base station. Herein, "base station" may be replaced by such terms as "fixed station", "Node B", "eNode B(eNB)", "gNode B(gNB)", "ng-eNB", "advanced base station(ABS)", or "access point".

Also, in the embodiments of the present disclosure, "terminal" may be replaced by such terms as "user equipment(UE)", "mobile station(MS)", "subscriber station(SS)", "mobile subscriber station(MSS)", "mobile terminal" or "advanced mobile station(AMS)".

In addition, a transmission end refers to a fixed and/or mobile node that provides a data service or a voice service, and a reception end means a fixed and/or mobile node that receives a data service or a voice service. Accordingly, in the case of an uplink, a mobile station may be a transmission end, and a base station may be a reception end. Likewise, in the case of a downlink, a mobile station may be a reception end, and a base station may be a transmission end.

The embodiments of the present disclosure may be supported by standard documents disclosed in at least one of the following radio access systems: an IEEE 802 xx system, a 3rd generation partnership project (3GPP) system, a 3GPP long term evolution (LTE) system, a 3GPP 5th generation (5G) new radio (NR) system and a 3GPP2 system, and in particular, the embodiments of the present disclosure may be supported by the following documents: 3GPP TS (technical specification) 38.211, 3GPP TS 38.212, 3GPP TS 38.213, 3GPP TS 38.321, and 3GPP TS 38.331.

In addition, the embodiments of the present disclosure are applicable to another radio access system but is not limited to the above-described system. As an example, they are applicable to a system applied after a 3GPP 5G NR system and are not limited to a specific system.

That is, obvious steps and parts not described in the embodiments of the present disclosure may be described with reference to the above documents. In addition, all the terms disclosed in this document may be explained by the standard document.

Hereinafter, a preferred embodiment according to the present disclosure will be described in detail with reference to accompanying drawings. Detailed descriptions disclosed below together with accompanying drawings are intended to describe example embodiments of the present disclosure and not intended to show any sole embodiment in which a technical configuration of the present disclosure can be implemented.

In addition, specific terms used in the embodiments of the present disclosure are provided to help understand the present disclosure, and such specific terms may be used in any other modified forms without departing from the technical idea of the present disclosure.

The following technology may be applied to various radio access systems such as Code Division Multiple Access (CDMA), Frequency Division Multiple Access (FDMA), Time Division Multiple Access (TDMA), Orthogonal Frequency Division Multiple Access (OFDMA), Single Carrier Frequency Division Multiple Access (SC-FDMA) and the like.

For clarity of explanation, the descriptions below are based on a 3GPP communication system (e.g. LTE, NR and the like), but the technical idea of the present disclosure is not limited thereto. LTE may mean a technology after 3GPP TS 36.xxx Release 8. Specifically, the LTE technology after 3GPP TS 36.xxx Release 10 may be referred to as LTE-A, and the one after 3GPP TS 36.xxx Release 13 may be referred to as LTE-A pro. 3GPP NR may mean a technology after TS 38.xxx Release 15. 3GPP 6G may mean a technology after TS Release 17 and/or Release 18. "xxx' means the specific number of a standard document. LTE/NR/6G may be referred to collectively as 3GPP system.

Contents described in standard documents released earlier than the present disclosure may be referred to for the background art, terms and abbreviations used in the present disclosure. As an example, 36.xxx and 38.xxx standard documents may be referred to.

For terms, abbreviations, and other backgrounds that may be used in this document, reference may be made to the following standard document descriptions published prior to this document. In particular, terms, abbreviations, and other background technologies related to LTE/EPS (Evolved Packet System) may refer to 36.xxx series, 23.xxx series, and 24.xxx series, and NR (new radio)/5GS related terms and abbreviations and other backgrounds may refer to the 38.xxx series, 23.xxx series and 24.xxx series.

Hereinafter, the present disclosure is described based on the terms defined as above.

Three major requirement areas of 5G include (1) an enhanced mobile broadband (eMBB) area, (2) a massive machine type communication (mMTC) area, and (3) an ultra-reliable and low latency communications (URLLC) area.

Some use cases may require multiple areas for optimization, and other use case may be focused on only one key performance indicator (KPI). 5G supports these various use cases in a flexible and reliable method.

## Communication system applicable to the present disclosure

Although not limited thereto, various descriptions, functions, procedures, proposals, methods and/or operating flowcharts of the present disclosure disclosed herein may be applied to various fields requiring wireless communication/connection (e.g., 5G) between devices.

Hereinafter, more detailed illustrations will be presented with reference to drawings. In the drawings/description below, unless otherwise mentioned, the same drawing symbol may illustrate the same or corresponding hardware block, software block or functional block.

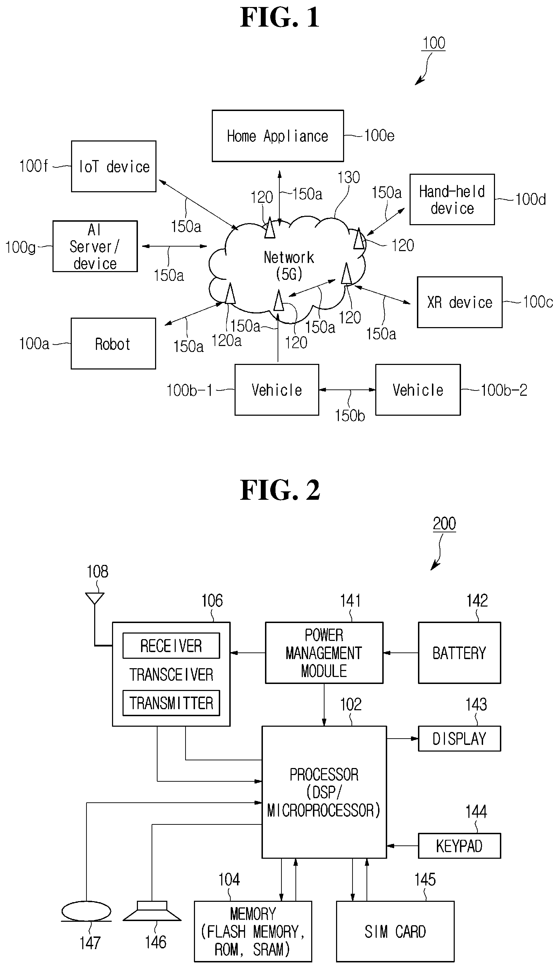

FIG. 1 is a view illustrating an example communication system applied to the present disclosure.

Referring to FIG. 1, a communication system 100 applied to the present disclosure includes a wireless device, a base station, and a network. Herein, the wireless device means a device performing communication using a wireless connection technology (e.g., 5G NR, LTE) and may be referred to as a communication/wireless/5G device. Without being limited thereto, the wireless device may include a robot 100a, vehicles 100b-1 and 100b-2, an extended reality (XR) device 100c, a hand-held device 100d, a home appliance 100e, an Internet of Thing (IoT) device 100f, and an artificial intelligence (AI) device/server 100g. For example, a vehicle may include a vehicle equipped with a wireless communication function, an autonomous driving vehicle, a vehicle capable of performing vehicle-to-vehicle communication, and the like. Herein, the vehicles 100b-1 and 100b-2 may include an unmanned aerial vehicle (UAV) (e.g., drone). The XR device 100c may include an augmented reality (AR)/virtual reality (VR)/mixed reality (MR) device and may be embodied in forms of a head-up display (HUD) installed in a vehicle, a television, a smartphone, a computer, a wearable device, a home appliance, digital signage, a vehicle, a robot, and the like. The hand-held device 100d may include a smartphone, a smart pad, a wearable device (e.g., a smart watch, smart glasses), a computer (e.g., a notebook and the like) and the like. The home appliance 100e may include a TV, a refrigerator, a washing machine, and the like. The IoT device 100f may include a sensor, a smart meter, and the like. For example, the base station 120 and the network 130 may be embodied as wireless devices, and a specific wireless device 120a may operate as a base station/network node to another wireless device.

The wireless devices 100a to 100f may be connected to the network 130 via the base station 120. AI technology may be applied to the wireless devices 100a to 100f, and the wireless devices 100a to 100f may be connected to the AI server 100g through the network 130. The network 130 may be constructed using a 3G network, a 4G(e.g., LTE) network or a 5G(e.g., NR) network. The wireless devices 100a to 100f may communicate with each other through the base station 120/the network 130 but perform direct communication (e.g., sidelink communication) not through the base station 120/the network 130. For example, the vehicles 100b-1 and 100b-2 may perform direct communication (e.g., vehicle to vehicle (V2V)/vehicle to everything (V2X) communication). In addition, the IoT device 100f (e.g., a sensor) may communicate directly with another IoT device (e.g., a sensor) or another wireless device 100a to 100f.

Wireless communication/connection 150a, 150b and 150c may be made between the wireless devices 100a to 100f/the base station 120 and the base station 120/the base station 120. Herein, wireless communication/connection may be performed through various wireless connection technologies (e.g., 5G NR) such as uplink/downlink communication 150a, sidelink communication 150b (or D2D communication), and base station-to-base station communication 150c (e.g., relay, integrated access backhaul (IAB)). A wireless device and a base station/a wireless device and a base station and a base station may transmit/receive radio signals through the wireless communication/connections 150a, 150b and 150c. For example, the wireless communication/connections 150a, 150b and 150c may transmit/receive a signal through various physical channels. To this end, based on various proposals of the present disclosure, at least a part of various processes of setting configuration information for transmission/reception of a radio signal, various processes of processing a signal (e.g., channel encoding/decoding, modulation/demodulation, resource mapping/demapping, and the like), and a resource allocation process may be performed.

FIG. 2 may show an example of UE to which an implementation of the present specification is applied.

Referring to FIG. 2, a UE 200 may include a processor 202, a memory 204, a transceiver 206, one or more antennas 208, a power management module 241, a battery 242, a display 243, a keypad 244, a subscriber identification module (SIM) card 245, a speaker 246, and a microphone 247.

The processor 202 may be configured to implement a description, a function, a procedure, a proposal, a method and/or an operating flowchart disclosed in the present specification. The processor 202 may be configured to control one or more different components of the UE 200 to implement a description, a function, a procedure, a proposal, a method and/or an operating flowchart disclosed in the present specification. A layer of a wireless interface protocol may be embodied in the processor 202. The processor 202 may include an ASIC, other chipsets, a logic circuit and/or a data processing device.

The processor 202 may be an application processor. The processor 202 may include at least one of a DSP, a central processing unit (CPU), a graphics processing unit (GPU), and a modem (modulator and demodulator).

The memory 204 may be coupled operably with the processor 202 and store various information for operating the processor 202. The memory 204 may include a ROM, a RAM, a flash memory, a memory card, a storage medium and/or another storage device. In case of implementation in software, a technology described herein may be implemented using a module (e.g., a procedure, a function, and the like) executing a description, a function, a procedure, a proposal, a method and/or an operating flowchart disclosed in the present specification. The module may be stored in the memory 204 and be executed by the processor 202. The memory 204 may be embodied in the processor 202 or outside the processor 202 in which case the memory 204 may be communicatively coupled with the processor 202 through various methods known in technology.

The transceiver 206 may be operably coupled with the processor 202 and transmit and/or receive a radio signal. The transceiver 206 may include a transmitter and a receiver. The transceiver 206 may include a baseband circuit for processing a radio frequency signal. The transceiver 206 may transmit and/or receive a radio signal by controlling the one or more antennas 208.

The power management module 241 may manage the power of the processor 202 and/or the transceiver 206. The battery 242 may supply power to the power management module 241.

The display 243 may output a result processed by the processor 202. The keypad 244 may receive an input to be used in the processor 202. The keypad 244 may be displayed on the display 243.

The SIM card 245 is an integrated circuit for safely storing an international mobile subscriber identity (IMSI) and a relevant key and may be used to identify and authenticate a subscriber in a hand-held telephone device like a mobile phone or a computer. In addition, contact information may be stored in many SIM cards.

The speaker 246 may output a sounded-related result processed in the processor 202. The microphone 247 may receive a sounded-related input to be used in the processor 202.

In an implement of the present specification, a UE may operate as a transmitting device in an uplink and a receiving device in a downlink. In an implement of the present specification, a base station may operate as a receiving device in a UL and a transmitting device in a DL. In the present specification, a base station may be referred to as a node B (Node B), an eNode B (eNB), and a gNB and may not be limited to a specific form.

In addition, as an example, a UE may be embodied in various forms according to a use example/service. A UE may be configured by various components, devices/parts and/or modules. For example, each UE may include a communication device, a control device, a memory device, and an addition component. A communication device may a communication circuit and a transceiver. For example, a communication circuit may include one or more processors and/or one or more memories. For example, a transceiver may include one or more transceivers and/or one or more antennas. A control device may be electrically coupled with a communication device, a memory device and an additional component and control an overall operation of each UE. For example, a control device may control an electric/mechanical operation of each UE based on a program/a code/an instruction/information stored in a memory device. A control device may transmit information stored in a memory device to the outside (e.g., another communication device) via a communication device through a wireless/wired interface or store information received from the outside (e.g., another communication device) through the wireless/wired interface in the memory device.

An additional component may be configured in various ways according to a type of a UE. For example, an additional component may include at least one of a power device/battery, an input/output (I/O) device (e.g., an audio I/O port, a video I/O port), a driving device, and a computing device. In addition, without being limited thereto, a UE may be embodied in forms of the robot 100a of FIG. 1, the vehicles 100b-1 and 100b-2 of FIG. 1, the XR device 100c of FIG. 1, the hand-held device 100d of FIG. 1, the home appliance 100e of FIG. 1, the IoT device 100f of FIG. 1, a digital broadcast terminal, a hologram device, a public safety device, an MTC device, a medical device, a fintech device (or financial device), a security device, a climate/environment device, the AI server/device 100g of FIG. 1, the base station 120 of FIG. 1, and a network node. A UE may be used a mobile or fixed place according to a use example/service.

Various components, devices/parts and/or all the modules of a UE may be connected to each other through a wired interface, or at least a part thereof may be wirelessly connected through a communication device. In addition, each component, a device/a part and/or a module of a UE may further include one or more components. For example, a control device may be configured by a set of one or more processors. As an example, a control device may be configured by a set of a communication control processor, an application processor (AP), an electronic control unit (ECU), a GPU, and a memory control processor. As anther example, a memory device may be configured by a RAM, a dynamic RAM (DRAM), a ROM, a flash memory, a volatile memory, a non-volatile memory, and/or a combination thereof.

## 5G System Architecture to which the Present Disclosure is Applicable

A 5G system is an advanced technology from 4G LTE mobile communication technology and supports a new radio access technology (RAT), extended long term evolution (eLTE) as an extended technology of LTE, non-3GPP access (e.g., wireless local area network (WLAN) access), etc. through the evolution of the existing mobile communication network structure or a clean-state structure.

The 5G system is defined based on a service, and an interaction between network functions (NFs) in an architecture for the 5G system can be represented in two ways as follows.

Reference point representation: indicates an interaction between NF services in NFs described by a point-to-point reference point (e.g., N11) between two NFs (e.g., AMF and SMF).

Service-based representation: network functions (e.g., AMF) within a control plane (CP) allow other authenticated network functions to access its services. The representation also includes a point-to-point reference point, if necessary.

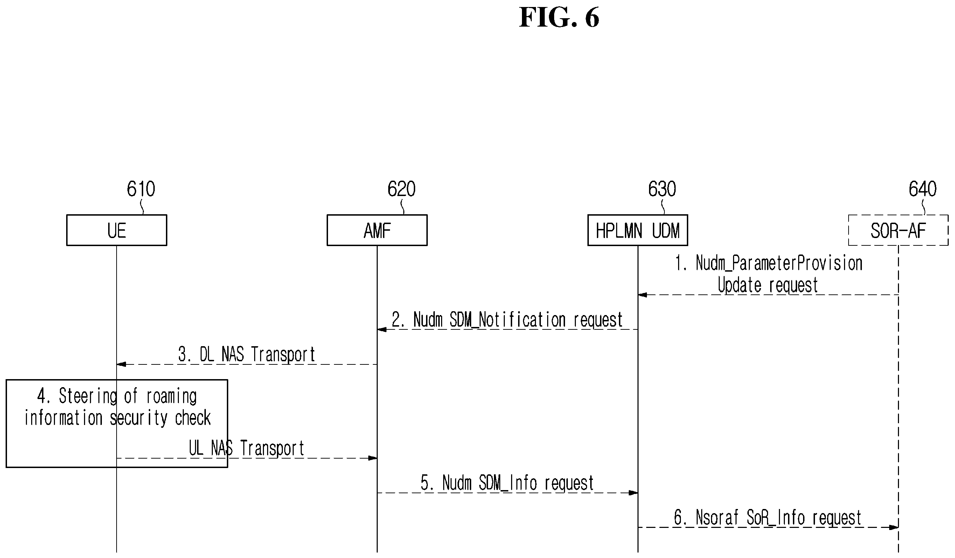

5GC (5G Core) may include various components, part of which are shown in FIG. 6, including an access and mobility management function (AMF), a session management function (SMF), a policy control function (PCF), a Prose user plane function (UPF), an application function (AF), unified data management (UDM), and a non-3GPP interworking function (N3IWF).

A UE is connected to a data network via the UPF through a next generation radio access network (NG-RAN) including the gNB. The UE may be provided with a data service even through untrusted non-3GPP access, e.g., a wireless local area network (WLAN). In order to connect the non-3GPP access to a core network, the N3IWF may be deployed.

The N3IWF performs a function of managing interworking between the non-3GPP access and the 5G system. When the UE is connected to non-3GPP access (e.g., WiFi referred to as IEEE 801.11), the UE may be connected to the 5G system through the N3IWF. The N3IWF performs control signaling with the AMF and is connected to the UPF through an N3 interface for data transmission.

The AMF may manage access and mobility in the 5G system. The AMF may perform a function of managing (non-access stratum) NAS security. The AMF may perform a function of handling mobility in an idle state.

The UPF performs a function of gateway for transmitting and receiving user data. The UPF node 440 may perform the entirety or a portion of a user plane function of a serving gateway (S-GW) and a packet data network gateway (P-GW) of 4G mobile communication.

The UPF is a component that operates as a boundary point between a next generation radio access network (NG-RAN) and the core network and maintains a data path between the gNB and the SMF. In addition, when the UE moves over an area served by the gNB, the UPF serves as a mobility anchor point. The UPF may perform a function of handling a PDU. For mobility within the NG-RAN (which is defined after 3GPP Release-15), the UPF may route packets. In addition, the UPF may also serve as an anchor point for mobility with another 3GPP network (RAN defined before 3GPP Release-15, e.g., universal mobile telecommunications system (UMTS) terrestrial radio access network (UTRAN), evolved (E)-UTRAN or global system for mobile communication (GERAN)/enhanced data rates for global evolution (EDGE) RAN. The UPF may correspond to a termination point of a data interface toward the data network.

The PCF is a node that controls an operator's policy. The AF is a server for providing various services to the UE. The UDM is a server that manages subscriber information, such as home subscriber server (HSS) of 4G mobile communication. The UDM stores and manages the subscriber information in a unified data repository (UDR).

The SMF may perform a function of allocating an Internet protocol (IP) address of the UE. In addition, the SMF may control a packet data unit (PDU) session.

For convenience of explanation, hereinafter, reference numerals may be omitted for AMF, SMF, PCF, UPF, AF, UDM, N3IWF, gNB, or UE, which may operate with reference to contents described in standard documents released earlier than the present document.

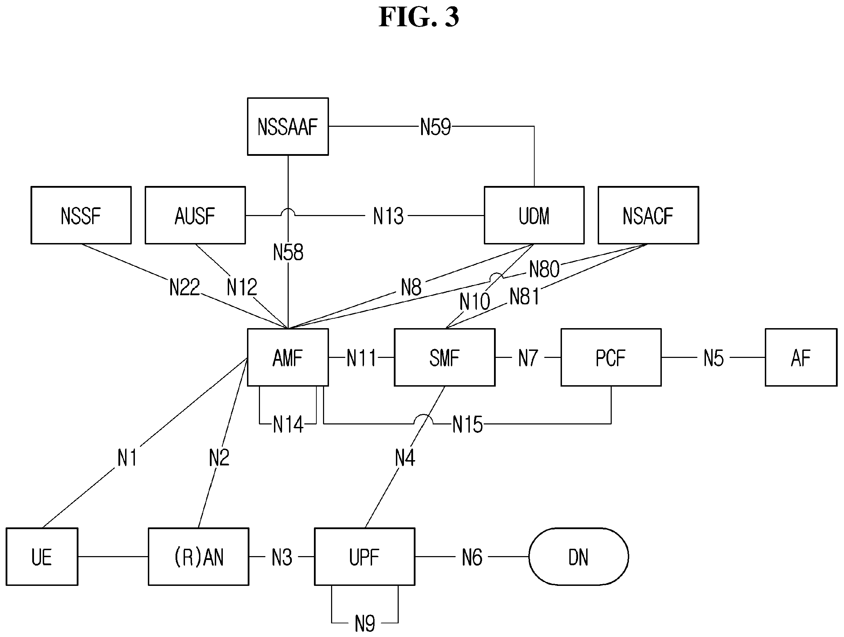

FIG. 3 is a view illustrating an example expressing a structure of a wireless communication system, which is applied to the present disclosure, from a node perspective.

Referring to FIG. 3, a UE is connected to a data network (DN) through a next generation RAN. A control plane function (CPF) node performs all or a part of the functions of a mobility management entity (MME) of 4G mobile communication and all or a part of serving gateway (S-GW) and PDN gateway (P-GW) functions. The CPF node includes AMF and SMF.

A UPF node performs a function of a gateway in which data of a user is transmitted and received.

An authentication server function (AUSF) authenticates and manages a UE. A network slice selection function (NSSF) is a node for network slicing described below.

A network exposure function (NEF) provides a mechanism that safely opens the service and function of 5G core.

Reference points in FIG. 3 are described as follows. N1 represents a reference point between UE and AMF. N2 represents a reference point between (R)AN and AMF. N3 represents a reference point between (R)AN and UPF. N4 represents a reference point between SMF and UPF. N5 represents a reference point between PCF and AF. N6 represents a reference point between UPF and DN. N7 represents a reference point between SMF and PCF. N8 represents a reference point between UDM and AMF. N9 represents a reference point between UPFs. N10 represents a reference point between UDM and SMF. N11 represents a reference point between AMF and SMF. N12 represents a reference point between AMF and AUSF. N13 represents a reference point between UDM and AUSF. N14 represents a reference point between AMFs. N15 represents a reference point between PCF and AMF in a non-roaming scenario and a reference point between AMF and PCF of a visited network in a roaming scenario. N16 represents a reference point between SMFs. N22 represents a reference point between AMF and NSSF. N30 represents a reference point between PCF and NEF. N33 may represent a reference point between AF and NEF, and the above-described entity and interface may be configured with reference to contents described in standard documents released earlier than the present document.

A radio interface protocol is based on the 3GPP radio access network standard. The radio interface protocol is horizontally divided into a physical layer, a data link layer, and a network layer, and is vertically divided into a user plane for transmission of data information and a control plane for transfer of control signal (signaling).

The protocol layers may be divided into L1 (layer-1), L2 (layer-2), and L3 (layer-3) based on the three lower layers of the open system interconnection (OSI) reference model widely known in communication systems.

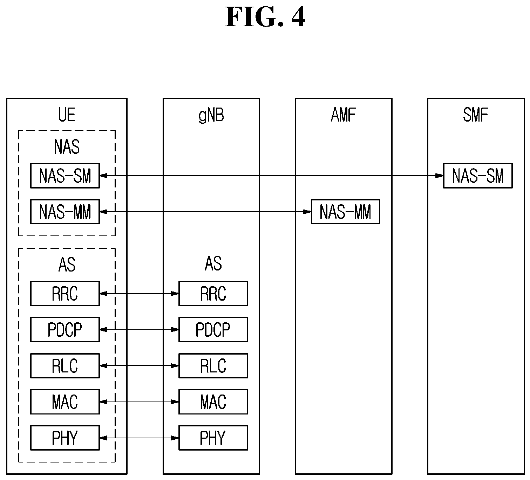

Hereinafter, the present disclosure will describe each layer of a radio protocol. FIG. 4 is a view illustrating an example of a radio interface protocol between UE and gBN.

Referring to FIG. 4, an access stratum (AS) layer may include a physical (PHY) layer, a medium access control layer, a radio link control (RLC) layer, a packet data convergence protocol (PDCP) layer, and a radio resource control (RRC) layer, and an operation based on each layer may be performed with reference to contents described standard documents released earlier than the present document.

A terminal may obtain system information broadcast from a base station, select a suitable cell and be camped. Then, the terminal may obtain configuration information based on a service and be connected to a network. As an example, a public land mobile network (PLMN) may consist of a mobile country code (MCC) and a mobile network code (MNC). Herein, a home PLMN (HPLMN) may be a PLMN where a terminal is defined, and a visited PLMN (VPLMN) may be a PLMN based on a current location of the terminal. In addition, an equivalent HPLMN may be referred to as a PLMN equivalent to a HPLMN, and a list may be stored in a universal subscriber identity module (USIM) of the terminal. The terminal may select a PLMN with a high priority, and an automatic mode or a manual mode may be considered for selecting the PLMN.

Specifically, a terminal may perform PLMN selection when being turned on or returning to communication coverage from out-of-service coverage. The terminal may preferably select a PLMN registered last or a PLMN within an equivalent HPLMN and register it to a network. When the terminal cannot access a HPLMN or an equivalent PLMN, the terminal may select another PLMN based on priority information stored in a USIM. That is, the terminal may select a PLMN based on priority information for PLMNs.

As an example, when selecting a PLMN based on an automatic mode, a terminal may automatically select a PLMN based on a preset priority. Specifically, the terminal may automatically select PLMNs in the order of a HPLMN, an equivalent HPLMN, a user PLMN, and other PLMNs, but may not be limited thereto. On the other hand, when performing PLMN selection based on a manual mode, the terminal may display an accessible PLMN list and perform connection to a selected PLMN. As an example, the terminal may also select a prohibited PLMN based on PLMN selection, and when registration is successfully performed, the PLMN may be prohibited no longer.

In addition, as an example, when selecting a PLMN based on roaming, a terminal may be provided with a service from a VPLMN not a HPLMN. As an example, a terminal may be registered to a PLMN outside the coverage of a HPLMN (e.g., another country) based on information stored in a USIM. As an example, a terminal may periodically search for a HPLMN but may not be limited thereto.

In addition, as for PLMN selection of a roaming terminal, steering of roaming (SOR) may mean updating a PLMN/access-technology combination preferred by a HPLMN on a control plane. The terminal may receive a preferred PLMN/access-technology combination and perform PLMN selection based on a received PLMN/access-technology list. That is, a priority of an operator controlled PLMN selector with access technology may be changed to the received PLMN list.

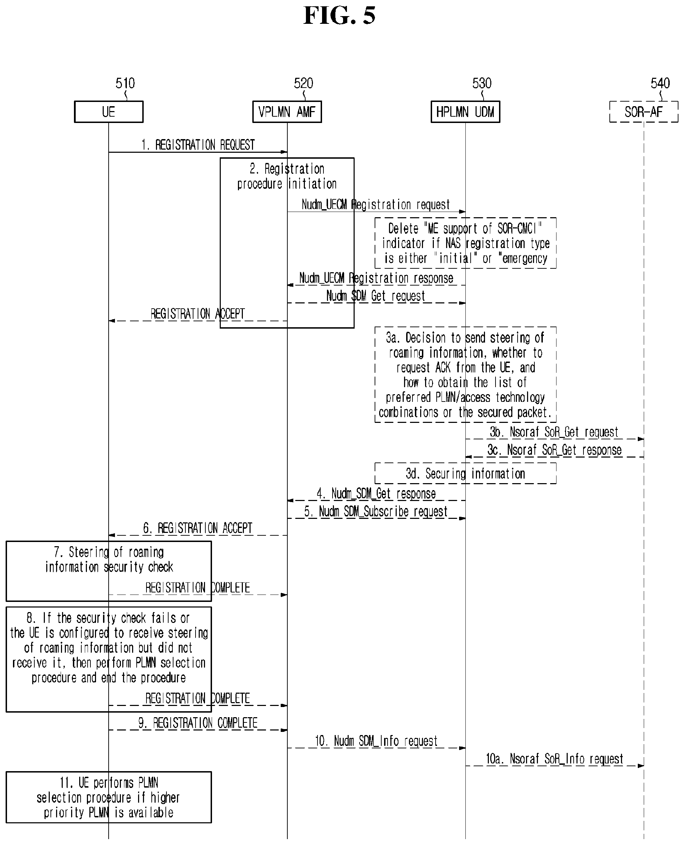

FIG. 5 is a view showing a method in which a terminal applicable to the present disclosure receives a PLMN list based on SOR during a process of registering to a VPLMN. Referring to FIG. 5, a terminal 510 may transmit a registration request message to a VPLMN AMF 520. The VPLMN AMF 520 may perform a registration procedure by obtaining terminal subscription information from a HPLMN UDM 530. As an example, the HPLMN UDM 530 may provide SOR information to the terminal when the terminal is registered to a VPLMN based on a policy of an operator. As an example, the HPLMN UDM 530 may obtain a list of preferred PLMN/access technology combinations from a SOR-AF 540 and provide the list to the terminal 510. The terminal 510 may select a PLMN with a high priority based on the received SOR information.

FIG. 6 is a view showing a method of updating a list of preferred PLMN/access technology combinations applicable to the present disclosure. Referring to FIG. 6, a SOR-AF 640 may forward an update request message (e.g., Nudm_ParameterProvision_Update_request) to a HPLMN UDM 630 in order to update a list of preferred PLMN/access technology combinations of a terminal. Then, the HPLMN UDM 630 may forward information indicating user profile modification (e.g., Nudm_SDM_Notification request) to an AMF 620. Herein, the information indicating user profile modification may include the above-described SOR information, and the AMF 620 may forward the information to a terminal 610 through NAS signaling. Herein, the terminal may perform security check for the SOR information, confirm that the SOR information is forwarded from a HPLMN, and forward a response to the AMF 620 through NAS signaling. Herein, when the list of preferred PLMN/access technology combinations of the terminal is included in the SOR information, the terminal may recognize a priority order of PLMN selection based on the information.

In addition, as an example, based on a request of an NAS of a terminal, an AS of the terminal may search for an available PLMN and report the corresponding information to the NAS. As an example, the terminal may select a PLMN based on PLMN priority information and find a suitable cell within the PLMN and be camped therein. Herein, as an example, regarding cell selection, the terminal may successfully search for a cell, decode a master information block (MIB) and a system information block (SIB), and perform cell selection when the condition of Formula 1 below is satisfied, and Srvxlev and Squal of Formula 1 may be Formula 2 and Formula 3 below.

[Formula 1]

$$Srxlev > 0 \text{ AND } Squal > 0$$

[Formula 2]

$$Srxlev = Q_{rxlevmeas} - (Q_{rxlevmin} + Q_{rxlevminoffset}) - Pcompensation - Qoffset_{temp}$$

[Formula 3]

$$Squal = Q_{qualmeas} - (Q_{qualmin} + Q_{qualminoffset}) - Qoffset_{temp}$$

In addition, respective configurations of Formula 1 to Formula 3 may be as shown in Table 1 below.

[Table 1]

| Srxlev | Cell selection RX level value (dB) |
|---|---|
| Squal | Cell selection quality value (dB) |
| Qoffset$_{temp}$ | Offset temporarily applied to a cell as specified in TS 36.331 [3] (dB) |
| Q$_{rxlevmeas}$ | Measured cell RX level value (RSRP) |
| Q$_{qualmeas}$ | Measured cell quality value (RSRQ) |
| Q$_{rxlevmin}$ | Minimum required RX level in the cell (dBm). Q$_{rxlevmin}$ is obtained from *q-RxLevMin* in SIB1, SIB3, SIB5, or NR SIB5. When the UE who is camped on a NR cell is evaluating an E-UTRA cell, if Q$_{rxlevminoffsetcelll}$ is signalled in NR SIBS in TS 38.331 [37] for the E-UTRA cell, this cell specific offset is added to *q-RxLevMin* to achieve the required minimum RX level in the E-UTRA cell. |
| Q$_{qualmin}$ | Minimum required quality level in the cell (dB) When the UE who is camped on a NR cell is evaluating an E-UTRA cell, if Q$_{qualminoffsetcell}$ is signalled in NR SIBS in TS 38.331 [37] for the E-UTRA cell, this cell specific offset is added to achieve the required minimum quality level in the E-UTRA cell. |
| Q$_{rxlevminoffset}$ | Offset to the signalled Q$_{rxlevmin}$ taken into account in the Srxlev evaluation as a result of a periodic search for a higher priority PLMN while camped normally in a VPLMN TS 23.122 [5] |
| Q$_{qualminoffset}$ | Offset to the signalled Q$_{qualmin}$ taken into account in the Squal evaluation as a result of a periodic search for a higher priority PLMN while camped normally in a VPLMN TS 23.122 [5] |

(continued)

| | | |
|---|---|---|
| Pcompensation | If the UE supports the *additionalPmax* in the *NS-PmaxList,* if present, in SIB1, SIB3 and SIB5: $\max(P_{EMAX1} - P_{PowerClass}, 0) - (\min(PEMAX2, P_{PowerClass}) - \min(P_{EMAX1}, P_{PowerClass}))$ (dB); else: if $P_{PowerClass}$ is 14 dBm: $\max(P_{EMAX1} - (P_{PowerClass} - \text{Poffset}), 0)$ (dB); else: $\max(P_{EMAX1} - P_{PowerClass}, 0)$ (dB) For IAB-MT, $P_{compensation}$ is set to 0. |
| $P_{EMAX1}, P_{EMAX2}$ | Maximum TX power level an UE may use when transmitting on the uplink in the cell (dBm) defined as $P_{EMAX}$ in TS 36.101 [33]. $P_{EMAX1}$ and $P_{EMAX2}$ are obtained from the *p-Max* and the *NS-PmaxList* respectively in SIB1, SIB3 and SIB5 as specified in TS 36.331 [3]. |
| $P_{PowerClass}$ | Maximum RF output power of the UE (dBm) according to the UE power class as defined in TS 36.101 [33] |

In addition, as an example, regarding narrowband (NB) IoT, cell selection may be performed when the condition of Formula 4 below is satisfied, and Srxlev and Squal of Formula 4 may be Formula 5 and Formula 6 below.

[Formula 4]

$$\text{Srxlev} > 0 \text{ AND Squal} > 0$$

[Formula 5]

$$\text{Srxlev} = Q_{rxlevmeas} - Q_{rxlevmin} - \text{Pcompensation} - \text{Qoffset}_{temp}$$

[Formula 6]

$$\text{Squal} = Q_{qualmeas} - Q_{qualmin} - \text{Qoffset}_{temp}$$

In addition, respective configurations of Formula 4 to Formula 6 may be as shown in Table 2 below.

[Table 2]

| | |
|---|---|
| Srxlev | Cell selection RX level value (dB) |
| Squal | Cell selection quality value (dB) |
| Qoffsettemp | Offset temporarily applied to a cell as specified in TS 36.331 [3] (dB) |
| Qrxlevmeas | Measured cell RX level value (RSRP) If RSRP is measured on non-anchor carrier of the cell, the measured RSRP value is translated to Qrxlevmeas as below. Qrxlevmeas = QrxlevmeasNonAnchor - nrs-PowerOffsetNonAnchor. Where QrxlevmeasNonAnchor is the Measured RX level (RSRP) of the non-anchor carrier. |
| Qqualmeas | Measured cell quality value (RSRQ) |
| Qrxlevmin | Minimum required RX level in the cell (dBm) If UE is not authorized for enhanced coverage and Qoffsetauthorization is valid then Qrxlevmin = Qrxlevmin + Qoffsetauthorization. |
| Qqualmin | Minimum required quality level in the cell (dB) |

| | | |
|---|---|---|
| Pcompensation | If the UE supports the additionalPmax in the NS-PmaxList-NB, if present, in SIB1-NB, SIB3-NB and SIB5-NB: max(PEMAX1 -PPowerClass, 0) - (min(PEMAX2, PPowerClass) - min(PEMAX1, PPower-Class)) (dB); else: if PPowerClass is 14 dBm: max(PEMAX1 -(PPowerClass - Poffset), 0) (dB); else: max(PEMAX1 -PPowerClass, 0) (dB) | |
| PEMAX1, PEMAX2 | Maximum TX power level an UE may use when transmitting on the uplink in the cell (dBm) defined as PEMAX in TS 36.101 [33]. PEMAX1 and PEMAX2 are obtained from the p-Max and the NS-PmaxList-NB respectively in SIB1-NB, SIB3-NB and SIB5-NB as specified in TS 36.331 [3]. | |
| PPowerClass | Maximum RF output power of the UE (dBm) according to the UE power class as defined in TS 36.101 [33] | |
| Srxlev | Cell selection RX level value (dB) | |
| Squal | Cell selection quality value (dB) | |
| $Qoffset_{temp}$ | Offset temporarily applied to a cell as specified in TS 36.331 [3] (dB) | |
| $Q_{rxlevmeas}$ | Measured cell RX level value (RSRP) If RSRP is measured on non-anchor carrier of the cell, the measured RSRP value is translated to $Q_{rxlevmeas}$ as below. $Q_{rxlevmeas} = Q_{rxlevmeasNonAnchor}$ - *nrs-PowerOffsetNonAnchor.* Where $Q_{rxlevmeasNonAnchor}$ is the Measured RX level (RSRP) of the non-anchor carrier. | |
| $Q_{qualmeas}$ | Measured cell quality value (RSRQ) | |
| $Q_{rxlevmin}$ | Minimum required RX level in the cell (dBm) If UE is not authorized for enhanced coverage and $Qoffset_{authorization}$ is valid then $Q_{rxlevmin} = Q_{rxlevmin} + Qoffset_{authorization}$. | |
| $Q_{qualmin}$ | Minimum required quality level in the cell (dB) | |
| Pcompensation | If the UE supports the *additionalPmax* in the *NS-PmaxList-NB,* if present, in SIB1-NB, SIB3-NB and SIB5-NB: $max(P_{EMAX1} -P_{PowerClass}, 0) - (min(P_{EMAX2}, P_{PowerClass}) - min(P_{EMAX1}, P_{PowerClass}))$ (dB); else: if $P_{PowerClass}$ is 14 dBm: $max(P_{EMAX1} -(P_{PowerClass} - Poffset), 0)$ (dB); else: $MAX(P_{EMAX1} -P_{PowerClass}, 0)$ (dB) | |
| $P_{EMAX1}, P_{EMAX2}$ | Maximum TX power level an UE may use when transmitting on the uplink in the cell (dBm) defined as $P_{EMAX}$ in TS 36.101 [33]. $P_{EMAX1}$ and $P_{EMAX2}$ are obtained from the *p-Max* and the *NS-PmaxList-NB* respectively in SIB1-NB, SIB3-NB and SIB5-NB as specified in TS 36.331 [3]. | |
| $P_{PowerClass}$ | Maximum RF output power of the UE (dBm) according to the UE power class as defined in TS 36.101 [33] | |

In addition, as an example, a terminal may consider a case in which a problem occurs to Tx. As an example, a T300 timer may be driven based on terminal Tx. The terminal may drive the timer when transmitting a RRC connection request message and may stop the timer when receiving a RRC connection setting message as network configuration information. Herein, if the T300 time is driven and the terminal does not receive the RRC connection setting message from a network, the timer may expire.

Herein, when the terminal is an NB IoT terminal and the terminal receives an offset temp-related parameter (e.g., connEstFailOffset) from a system information block for NB IoT, the terminal may use a corresponding value for the above-described $Qoffset_{temp}$ during a cell selection and reselection process. On the other hand, when the terminal does not receive the above-described parameter, the terminal may set the above-described Qoffset$_{temp}$ to an infinite value. That is, when a problem occurs to Tx due to the above-described expiration of the timer, the terminal may set a cell selection criterion by considering the above-described Qoffset$_{temp}$ but may not be limited thereto.

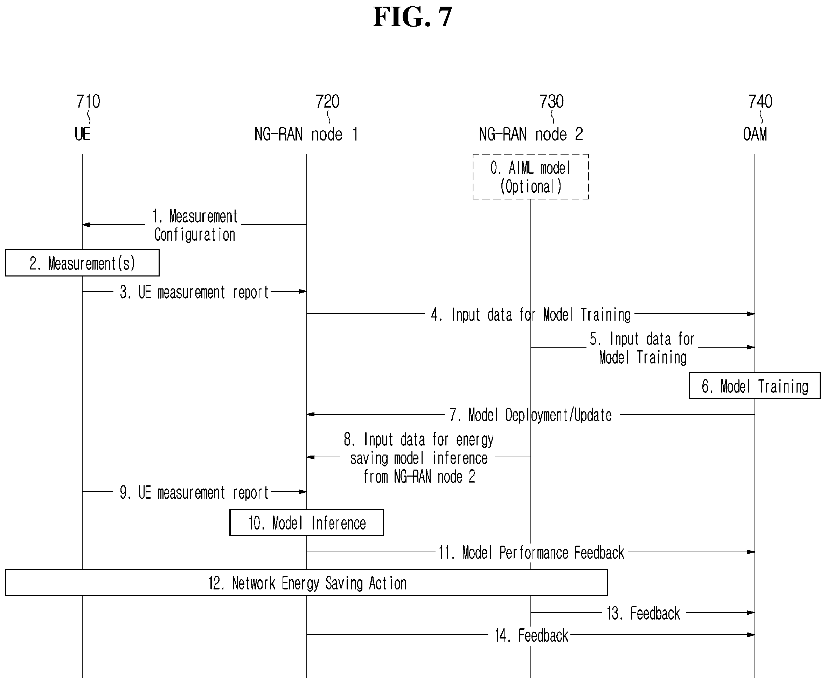

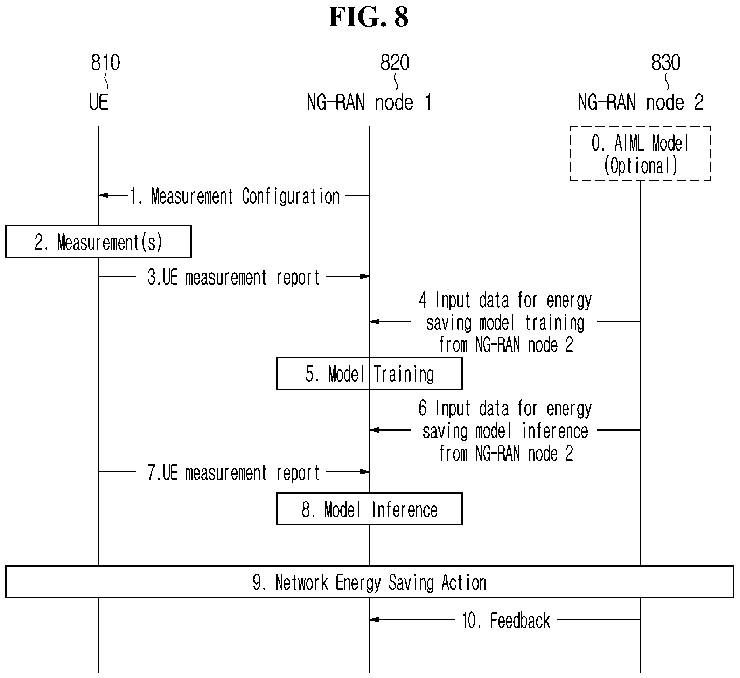

FIG. 7 and FIG. 8 may be operations based on an AI/ML model applicable to the present disclosure. As an example, an artificial intelligence/machine learning (AI/ML) model may be applied to collect measurement information of a terminal and information on a cell in which measurement is performed, which will be described below. As an example, an AI/ML function may be configured based on an AI/ML model which is already configured according to an AI/ML algorithm. Specifically, data may be provided as input data of model training and model inference. As an example, input data may be measurement information and information on a cell in which measurement is performed, but is not limited to a specific embodiment. Herein, training data provided for model training may be data provided for an AI/ML model training function. In addition, inference data provided for model inference may be data provided for an AI/ML model inference function. Model training may be training of an AI/ML model and an entity performing validation and testing, and thus a performance matrix for the AI/ML model may be provided. Model training may provide and update the AI/ML model to model inference, and the model inference may provide model performance feedback to the model training. That is, the model training may perform training for the AI/ML model through the feedback of the model inference and provide the updated AI/ML model to the model inference again. In addition, the model inference may be provided with inference data and generate an output through the provided AI/ML model and provide the output. That is, data for learning (or training) for the AI/ML model is provided so that the AI/ML model may be learned and constructed, and inference data is provided to the constructed AI/ML model and is output so that an operation based on the AI/ML model may be performed.

As a concrete example, referring to FIG. 7, a terminal 710 may receive a measurement configuration from an NG-RAN node 1 720 and perform measurement. Then, the terminal may perform measurement reporting to the NG-RAN node 1 720, and the NG-RAN node 1 720 may provide input information for model training to OAM 740. As another example, an NG-RAN node 2 730 may also provide input information for model training but is not limited to a specific embodiment. Then, training may be performed in model training of the OAM 740, and information on a result may be provided to the NG-RAN node 1 720. Herein, model inference may be provided in the NG-RAN node 1 720, and the model inference may be performed and information on a result may be collected and obtained.

As yet another example, referring to FIG. 8, a model training function and a model inference function may be provided in a mode NG-RAN node 1 820. The NG-RAN node 1 820 may measure a measurement configuration to a terminal 810 and obtain a measurement report. In addition, the NG-RAN node 1 820 may obtain input data from another NG-RAN node 830, perform model inference, and collect and obtain information on a result. As an example, based on FIG. 7 and FIG. 8, measurement information of a terminal and information on a cell in which measurement is performed may be provided as input data of AI/ML model training, and information output through model inference may be used, which will be described below.

As an example, when a terminal performs PLMN selection, the terminal may select a PLMN with a high priority. Priorities may be arranged in an order of HPLMN, equivalent HPLMN, user PLMN and other PLMN. After a terminal performs PLMN selection, the terminal may find a suitable cell in a selected PLMN and be camped therein. As an example, a case may be considered in which a signal quality of HPLMN is not good and a signal quality of other PLMN is good. In the above-described case, a terminal may select an HPLMN based on a priority order, but the signal quality in the HPLMN is not good so that connection may not be smooth. Herein, an existing terminal may be a terminal with mobility, and PLMN selection may be performed by moving to a cell with good quality based on movement of a terminal so that smooth communication may be performed through another cell in the above-described situation.

On the other hand, since a stationary terminal (e.g., stationary IoT terminal) has no mobility, a problem may occur in the above-described situation. As a concrete example, a stationary terminal may be a stationary IoT terminal. As yet another example, a stationary terminal (UE) may be a sensor node. That is, a stationary terminal may be a terminal that does not move but is fixed to a specific location. As an example, as a device of measuring a water level in a high tide alert network, measuring the temperature of a high-pressure electric line, measuring electric power, measuring water and the like, stationary terminals may be used by being installed in a hardly accessible place or in an innermost recess of an indoor place.

Herein, as an example, an area where a stationary terminal is installed may hardly satisfy a local coverage condition. As a concrete example, an SIM used for a stationary terminal may be a global SIM used in a plurality of countries. Herein, a stationary terminal thus installed may be installed in any other country than those where an SIM is provided with a module. Herein, the stationary terminal may preferably select other PLMN with good signal quality than an HPLMN with poor signal quality, but the terminal may select the HPLMN based on a priority of PLMN stored in an SIM. In the above-described case, the stationary terminal may not perform communication smoothly.

In consideration of what is described above, network selection based on a signal level may be performed in a stationary terminal.

Specifically, an operator controlled signal threshold per access technology may be stored in a universal subscriber identity module (USIM). As an example, even in case of a PLMN with a high priority, a stationary terminal may select a PLMN capable of accessing a cell with better signal quality than an original signal level based on an operator controlled signal threshold per access technology.

Herein, as an example, a criterion for providing an operator controlled signal threshold per access technology by a network may be needed, which will be described below. As an example, an operator controlled signal threshold per access technology may not be determined solely based on any one condition. As an example, an operator controlled signal threshold per access technology (hereinafter, signal threshold) may be determined by considering terminal measurement information and other terminal information. As an example, a signal threshold may use a statistical value and a predicted value for signal strength measurement results of a terminal to maximize the performance of a system. However, a surrounding environment of a terminal may be different, and a signal threshold needs to be changed in consideration of a terminal situation. Herein, as an example, a criterion for determining a signal threshold and an update criterion may be set based on parameters set by an operator, and a signal threshold may be determined based on the criteria. As another example, a statistical value of measurement results of a terminal measured in real time and a predicted value may be used to control a signal threshold to be determined, which will be described below. As an example, the description below is based on a stationary IoT terminal but may not be limited thereto. As an example, another type of IoT terminals or a terminal with mobility may be applicable, but for convenience of explanation, the description below is based on a stationary IoT terminal.

When a stationary IoT terminal (e.g., stationary IoT terminal) receives a signal of a PLMN with an unexpectedly high priority, an NAS of the stationary IoT terminal may select a cell by selecting a PLMN based on a priority order even under a weak signal intensity where data transmission is impossible. That is, the stationary IoT terminal may not select a PLMN hoping to access but a PLMN having a high priority and a low signal intensity. In the above-described case, the stationary IoT terminal may not perform actual data transmission due to the low signal intensity but frequently experience a signal connection release.

In addition, as an example, a stationary IoT terminal may select a PLMN but select a PLMN with a high priority and a low signal intensity again according to an operation of a terminal NAS that periodically performs higher priority PLMN selection. Accordingly, the stationary IoT terminal may not normally actual data transmission, and ping pong may occur continuously. In consideration of the above-described problem, an operator controlled signal threshold per access technology (hereinafter, signal threshold) may be used to make a stationary IoT terminal select other PLMN even when there is an HPLMN with a high priority. That is, the stationary IoT terminal may be induced to select a PLMN with a signal intensity higher than a signal threshold.

Herein, a criterion or condition for determining or updating the above-described signal threshold may be needed for a network. As a concrete example, a network may determine in real time whether or not to a signal threshold, based on data statistics and prediction information, and determine the signal threshold itself. To this end, respective functions (or nodes) of the network may perform an operation considering the signal threshold.

As an example, a first network node may check whether or not to use a signal threshold by determining a terminal is a stationary IoT terminal. The first network node may check whether or not the terminal is a stationary IoT terminal by checking a RAT type of the terminal is a narrowband (NB) IoT. As yet another example, the first network node may check through subscription information of the terminal whether or not the terminal is a stationary IoT terminal. When the terminal is a stationary IoT terminal, the first network node may subscribe to a service requesting analytic information of the terminal by considering the signal threshold. As an example, the first network node may be an AMF or OAM (Operation, Administration, and Maintenance) but may not be limited to a specific node.

A second network node may collect and analyze relevant information for setting a signal threshold and determine whether or not to use the signal threshold. That is, the second network node may be a node with an analytic function. As a concrete example, the second network node may be a network data analytics function (NWDAF). As yet another example, the second network node may be a base station and be provided with a data analytics function at a base station level but is not limited to a specific embodiment. As yet another example, an analytic function may be a RAN node or a network node with an AI/ML and is not limited to a specific embodiment.

As an example, the second network node may control a terminal to select a PLMN with signal quality equal to or greater than a preset value. The second network node may determine a signal threshold as a preset value of signal quality and indicate the signal threshold to a terminal. For the above-described operation, the second network node may collect cell signal quality measurement information of a terminal and information on a cell where measurement is performed. Herein, as an example, the second network node may perform analysis based on measurement information collected from the terminal or another network node and information on a cell where measurement is performed and determine first whether or not to use a signal threshold. When determining to use a signal threshold, the second network node may perform analysis based on measurement information and information on a cell where measurement is performed, which are collected from the terminal or another network node, and determine a signal threshold.

As yet another example, the second network node may forward analytic information of a terminal to a third network node. As an example, the third network node may be a steering of roaming application function (SOR-AF) but may not be limited thereto. Herein, as an example, the third network node may order a terminal to collect measurement information for a signal threshold and collect measurement information and information on a cell where measurement is performed from the terminal.

As an example, the third network node may determine, based on collected information, whether or not to use a signal threshold. As yet another example, based on collected information, the third network node may determine a signal threshold or modify a predetermined signal threshold.

As a concrete example, the third network node may order a terminal to perform measurement by considering location information of the terminal and obtain information on a cell where measurement is performed. As an example, the third network node may obtain at least any one of the frequency of a cell where measurement is performed, a cell ID, a cell measurement result (e.g., RSRP, RSCP), Srxlev or Squal calculated by the terminal, Qrxlevmin, Qqualmin, Qoffsettemp, PLMN ID and priority information received by the terminal. Based on the above-described information, the third network node may determine whether not to use a signal threshold and the signal threshold itself. Then, the third network node may forward the threshold thus determined to the terminal.

As yet another example, the third network node may forward a threshold to a fourth network node, and the fourth network node may forward the threshold to the terminal. As an example, the fourth network node may be a user plane function (UPF) but may not be limited thereto.

When the above-described operator controlled signal threshold per access technology (hereinafter, signal threshold) is used and a terminal receives the signal threshold, the terminal may perform PLMN selection within a PLMN higher than the signal threshold. That is, the terminal may exclude a PLMN with a high priority but a signal lower than a signal threshold from selected PLMNs.

As a concrete example, it is possible to consider a case where a terminal frequently performs connection release or frequently performs mobility registration. As an example, when a terminal performs connection release more frequently than preset times or performs mobility registration (e.g., VPLMN from/to higher priority PLMN: HPLMN, EHPLMN, UPLMN, OPLMN), an analytic function node may obtain measurement information of a PLMN with a priority higher than a current PLMN registered for a preset time. That is, an analytic function node may analyze measured signal quality of a terminal of a PLMN with a priority higher than a current PLMN and information on a cell where measurement is performed. Herein, the analytic function node may determine whether or not the PLMN satisfies cell selection criteria (S criteria) by using signal quality of a cell of a PLMN with a priority higher than a current PLMN for a preset time. As an example, when the PLMN does not satisfy cell selection criteria based on signal quality of a cell of a PLMN with a priority higher than a current PLMN for a preset time, the analytic function node may configure a signal threshold for a terminal. Herein, the signal threshold thus set may be a value that makes cell selection criteria (S criteria) 0. As another example, the signal threshold thus set may be defined as a limit value or a preset value of signal quality.

As an example, the third network node (e.g., SOR-AF) may obtain measurement information and information on a cell where measurement is performed from a terminal, and this is the same as described above. Herein, when the third network node obtains measurement information and information on a cell where measurement is performed, the third network node may obtain location information of a terminal together. Herein, based on location information of a terminal, the third network node may determine and forward a different signal threshold for each terminal. As another example, when a terminal is a stationary IoT terminal, the third network node may recognize a location of the terminal during a process where the terminal performs registration, and even when not receiving location information from the terminal, the third network node may determine a signal threshold based on pre-recognized location information and forward the signal threshold to the terminal.

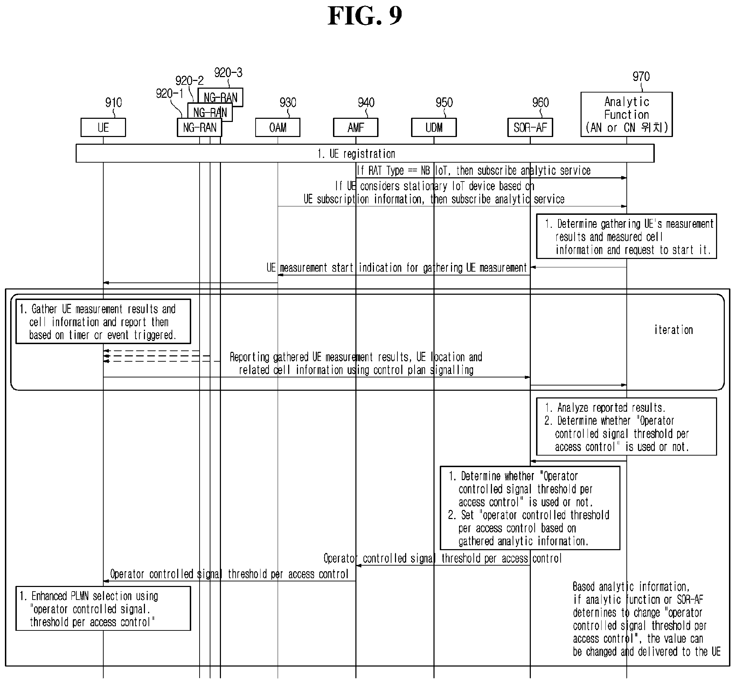

FIG. 9 is a view showing a method of collecting terminal-related information applicable to the present disclosure. Referring to FIG. 9, a terminal 910 may be registered to a network to access a 5G system. Based on whether or not a terminal is a stationary IoT terminal, a first network node may subscribe to a service requesting analytic information of the terminal. As an example, the first network node may be an OAM 930 or an AMF 940.

Whether or not a terminal is a stationary IoT terminal may be checked based on whether or not a RAT type (RAT_type) of the terminal is NB IoT. As another example, the first network node may check based on subscription information of the terminal whether or not the terminal is a stationary IoT terminal.

When the terminal is a stationary IoT terminal, the first network node may subscribe to a service requesting analytic information of the terminal. As an example, the first network node may request an analytic function node 970 as a second network node to subscribe to an analytic service requesting analytic information, and the analytic function node 970 may obtain terminal measurement information and information on a cell where measurement is performed. As an example, the analytic function node 970 may be present in an access network or be present in a core network. As a concrete example, a base station may have an analytic function and obtain terminal measurement information and information on a cell where measurement is performed. As another example, an analytic function may be present in a core network and be provided to an NWDAF. As yet another example, the analytic function node 970 may be configured as a stand-alone node or be combined with another function node but is not limited to a specific form. When the analytic function node 970 is configured as a stand-alone node, the analytic function node 970 may subscribe to an analytic information request service through an interface of the node. On the other hand, when the analytic function node 970 is combined with another function node, subscription to the service may be performed via the another function node.

Herein, the analytic information request service may a service for obtaining a predicted value for selecting a PLMN equal to or above a specific signal intensity by a specific signal threshold (operator controlled signal threshold per access control) even when the PLMN has a high priority for enhanced PLMN selection. Accordingly, the analytic function node 970 may determine to collect measurement information of a terminal and information on a cell where measurement is performed. Herein, the analytic function node 970 may request a SOR-AF 960 as a third network node to start to collect terminal measurement-related information in order to collect the above-described information. As an example, the analytic function node 970 may be an NWDAF, and the analytic function node 970 may forward an indication regarding a request for collecting terminal measurement-related information to the SOR-AF 960. Then, the SOR-AF 960 may indicate the terminal 910 to perform measurement to collect terminal measurement information through an SoR procedure. As an example, the SOR-AF 960 may indicate the OAM 930 to perform measurement for collecting terminal measurement information, and the OAM 930 may indicate measurement to the terminal 910 but may not limited thereto.

When the terminal 910 receives a measurement indication, the terminal may perform terminal measurement and collect information on a cell where measurement is performed. As an example, preset time information may further be indicated to the terminal 910. The terminal 910 may collect and report a terminal measurement value stored based on a preset time. As another example, the terminal 910 may collect and report a measurement value when a specific event is triggered. As yet another example, the terminal 910 may collect a mean value based on measurement for a predetermined time. As yet another example, the terminal 910 may collect terminal measurement information and information on a cell where measurement is performed, when there is information stored based on continuous expiry of a timer (e.g., T300).

Herein, the terminal measurement information is information on a measured result of a cell and may be at least one of a reference signal received power (RSRP), a reference signal received quality (RSRQ), a signal to noise and interference ratio (SINR), a received signal strength indicator (RSSI) and other measurement information but is not limited to a specific form.

In addition, information on a cell where measurement is performed may include at least any one of a cell ID, a PLMN ID, a frequency, a priority, a location, information on a cell selection criterion, and other information but is not limited thereto. As an example, the terminal 910 may obtain measurement information and information on a cell where measurement is performed by performing the above-described measurement through signals received from each of RAN nodes 920-1, 920-2 and 920-3. Then, the measurement information and the information on a cell where measurement is performed may be provided to the analytic function node 970 through the SOR-AF 960. As an example, measurement information and information on a cell where measurement is performed may be forwarded based on NAS signaling as control plane signaling. In addition, as an example, measurement information and information on a cell where measurement is performed may be repeatedly collected but is not limited to a specific embodiment.

Then, the analytic function node 970 may collect measurement information and information on a cell where measurement is performed from the terminal 960 or another network node and derive an analysis result. As an example, based on an analysis result, the analytic function node 970 may determine whether or not to use the above-described signal threshold (operator controlled signal threshold per access control). As another example, based on an analysis result, the analytic function node 970 may determine a signal threshold itself.

As yet another example, the SOR-AF 960 may also determine whether or not to use the above-described signal threshold (operator controlled signal threshold per access control) or determine the above-described signal threshold itself but is not limited to a specific embodiment. Then, the SOR-AF 960 may forward whether or not to use the above-described signal threshold and information on the signal threshold itself to the terminal 919. As an example, the SOR-AF 960 may forward the above-described signal threshold based on location information of the terminal from the terminal 910. As yet another example, the SOR-AF 960 may forward a different signal threshold to each terminal based on location information of a terminal.

In addition, as an example, the analytic function node 970 may derive an analysis result based on measurement information and information on a cell where measurement is performed, which are collected, and modify the above-described signal threshold. Then, a modified signal threshold may be forwarded to the terminal 910. As a concrete example, the analytic function node 970 may confirm information on a cell where measurement is performed based on location information of a terminal. As an example, cell information may include at least any one of the frequency of a cell, a cell ID, a cell measurement result, Srxlev or Squal calculated by the terminal, Qrxlevmin, Qqualmin, Qoffsettemp, PLMN ID and priority information that the terminal receives, but is not limited to a specific embodiment.

The analytic function node 970 may derive an analysis result based on the above-described information and determine the above-described signal threshold (operator controlled signal threshold per access control). As an example, when a PLMN with a priority higher than a PLMN registered to a current VPLMN does not satisfy a cell selection criterion for a preset time, a parameter may be set for the above-described operation, and the operation may be performed.

The terminal 910 may receive a determined signal threshold from the analytic function node 970 and perform PLMN selection. Herein, the terminal 910 may not select a PLMN below the signal threshold even when the PLMN has a high priority. That is, the terminal 910 may perform PLMN selection in a PLMN having a signal above the signal threshold.

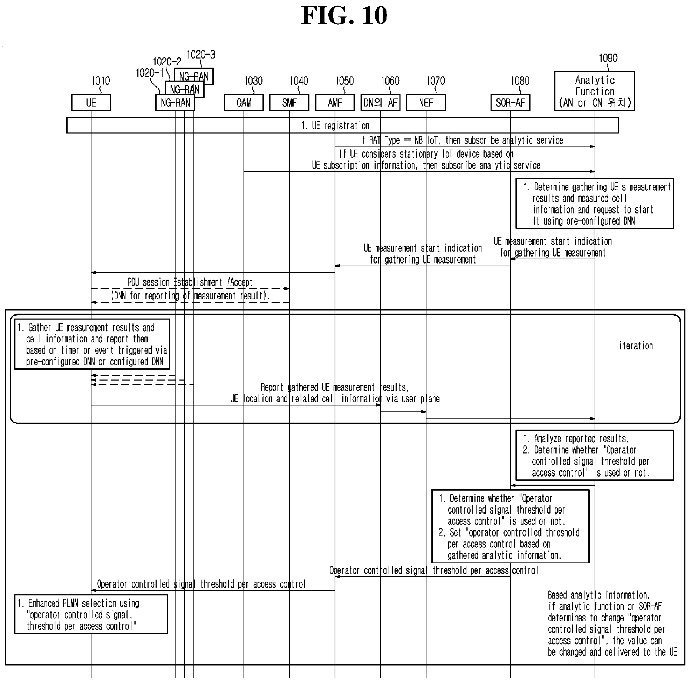

FIG. 10 is a view showing a method of collecting terminal-related information applicable to the present disclosure. Referring to FIG. 10, a terminal 1010 may be registered to a network to access a 5G system. Based on whether or not a terminal is a stationary IoT terminal, a first network node may subscribe to a service requesting analytic information of the terminal. As an example, the first network node may be an OAM 1030 or an AMF 1050.

Whether or not a terminal is a stationary IoT terminal may be checked based on whether or not a RAT type (RAT_type) of the terminal is NB IoT. As another example, the first network node may check based on subscription information of the terminal whether or not the terminal is a stationary IoT terminal. When the terminal is a stationary IoT terminal, the first network node may subscribe to a service requesting analytic information of the terminal. As an example, the first network node may request an analytic function node 1090 as a second network node to subscribe to an analytic service requesting analytic information, and the analytic function node 1090 may obtain terminal measurement information and information on a cell where measurement is performed. As an example, the analytic function node 1090 may be present in an access network or be present in a core network. As a concrete example, a base station may have an analytic function and obtain terminal measurement information and information on a cell where measurement is performed. As another example, an analytic function may be present in a core network and be provided to an NWDAF. As yet another example, the analytic function node 1090 may be configured as a stand-alone node or be combined with another function node but is not limited to a specific form. When the analytic function node 1090 is configured as a stand-alone node, the analytic function node 970 may subscribe to an analytic information request service through an interface of the node. On the other hand, when the analytic function node 1090 is combined with another function node, subscription to the service may be performed via the another function node.

Herein, the analytic information request service may a service for obtaining a predicted value for selecting a PLMN equal to or above a specific signal intensity by a specific signal threshold (operator controlled signal threshold per access control) even when the PLMN has a high priority for enhanced PLMN selection. Accordingly, the analytic function node 1090 may determine to collect measurement information of a terminal and information on a cell where measurement is performed. Herein, the analytic function node 1090 may request a SOR-AF 1080 as a third network node to start to collect terminal measurement-related information in order to collect the above-described information. As an example, the analytic function node 1090 may be an NWDAF, and the analytic function node 1090 may forward an indication regarding a request for collecting terminal measurement-related information to the SOR-AF 1080. As yet another example, the analytic function node 1090 may determine to collect measurement information and information on a cell where measurement is performed, by using a pre-configured deep neural network (DNN), but is not limited to a specific embodiment.

Then, the SOR-AF 1080 may indicate the terminal 1010 to perform measurement to collect terminal measurement information through an SoR procedure. As an example, the SOR-AF 1080 may indicate the AMF 1050 to perform measurement for collecting terminal measurement information, and the AMF 1050 may indicate measurement to the terminal 1010 but may not limited thereto.

When the terminal 1010 receives a measurement indication, the terminal may perform terminal measurement and collect information on a cell where measurement is performed. As an example, preset time information may further be indicated to the terminal 1010. The terminal 1010 may collect and report a terminal measurement value stored based on a preset time. As another example, the terminal 1010 may collect and report a measurement value when a specific event is triggered. As yet another example, the terminal 1010 may collect a mean value based on measurement for a predetermined time. As yet another example, the terminal 1010 may collect terminal measurement information and information on a cell where measurement is performed, when there is information stored based on continuous expiry of a timer (e.g., T300).

Herein, the terminal measurement information is information on a measured result of a cell and may be at least one of a reference signal received power (RSRP), a reference signal received quality (RSRQ), a signal to noise and interference ratio (SINR), a received signal strength indicator (RSSI) and other measurement information but is not limited to a specific form.

In addition, information on a cell where measurement is performed may include at least any one of a cell ID, a PLMN ID, a frequency, a priority, a location, information on a cell selection criterion, and other information but is not limited thereto. As an example, the terminal 1010 may obtain measurement information and information on a cell where measurement is performed by performing the above-described measurement through signals received from each of RAN nodes 1020-1, 1020-2 and 1020-3.

Herein, the measurement information and the information on a cell where measurement is performed may be provided to the analytic function node 1090 at an NEF 1070 through an AF 1060 of a data network through a user plane. As an example, the terminal 1010 may have established a PDU session by performing a protocol data unit (PDU) session establishment procedure through the SMF 1040. As another example, the terminal 1010 may construct a DNN for reporting a measurement result, obtain a measurement result value based on FIG. 7 and FIG. 8 described above, forward measurement information and information on a cell where measurement is performed through a user plane, but is not limited thereto.

Specifically, for what is described above, the analytic function node 1090 may provide a terminal measurement-related indication to the SOR-AF 1080. Then, the AMF 1050 may indicate that, when a terminal measurement-related indication is received from the SOR-AF 1080, measurement information and information on a cell where measurement is performed should be transmitted to an upper layer through a user plane. As an example, the AMF 1050 may indicate the above-described information to a terminal through NAS signaling. Then, when the upper layer of the terminal receives the above-described indication, the terminal 1010 may transmit PDU session establishment, and the SMF 1040 may set and give a DNN for transmitting preconfigured measurement information and provisioning service (PVS) information. Then, when a PDU session connection for transmitting a measurement result is performed, the terminal may forward at least any one of the terminal measurement information, terminal location information, and cell-related information, which are collected, to the AF 1060 of a DN and forward to the analytic function node 1090 through the NEF 1070.

Then, the analytic function node 1090 may collect measurement information and information on a cell where measurement is performed from the terminal 1010 or another network node and derive an analysis result. As an example, based on an analysis result, the analytic function node 1090 may determine whether or not to use a signal threshold (operator controlled signal threshold per access control). As another example, based on an analysis result, the analytic function node 1090 may determine a signal threshold itself.

As yet another example, the SOR-AF 1080 may also determine whether or not to use the above-described signal threshold (operator controlled signal threshold per access control) or determine the above-described signal threshold itself but is not limited to a specific embodiment. Then, the SOR-AF 1080 may forward whether or not to use the signal threshold and information on the signal threshold itself to the terminal. As an example, the SOR-AF 1080 may forward the signal threshold based on location information of the terminal from the terminal 1010.

In addition, as an example, the analytic function node 1090 may derive an analysis result based on measurement information and information on a cell where measurement is performed, which are collected, and modify the signal threshold. Then, a modified signal threshold may be forwarded to the terminal 1010. As a concrete example, the analytic function node 1090 may confirm information on a cell where measurement is performed based on location information of a terminal. As an example, information on a cell where measurement is performed may include at least any one of the frequency of a cell, a cell ID, a cell measurement result, Srxlev or Squal calculated by the terminal, Qrxlevmin, Qqualmin, Qoffsettemp, PLMN ID and priority information that the terminal receives, but is not limited to a specific embodiment.

The analytic function node 1090 may derive an analysis result based on the above-described information and determine the above-described signal threshold. As an example, when a PLMN with a priority higher than a PLMN registered to a current VPLMN does not satisfy a cell selection criterion for a preset time, a parameter may be set for the above-described operation, and the operation may be performed.

As another example, it is possible to consider a case where the analytic function node 1090 is a node with an AI/ML. Herein, the analytic function node 1090 may perform model training of the above-described AI/ML based on collected measurement information and measured cell information. In addition, a node with an AI/ML may provide collected measurement information and measured cell information as an input of model inference learned based on model training. Herein, the node with an AI/ML may derive at least any one of whether or not to use a signal threshold and a value of the signal threshold itself as an output based on the input of model inference, which is the same as described above.

The terminal 1010 may receive a determined signal threshold from the analytic function node 970 and perform PLMN selection. Herein, the terminal 1010 may not select a PLMN below the signal threshold even when the PLMN has a high priority. That is, the terminal 1010 may perform PLMN selection in a PLMN having a signal above the signal threshold.

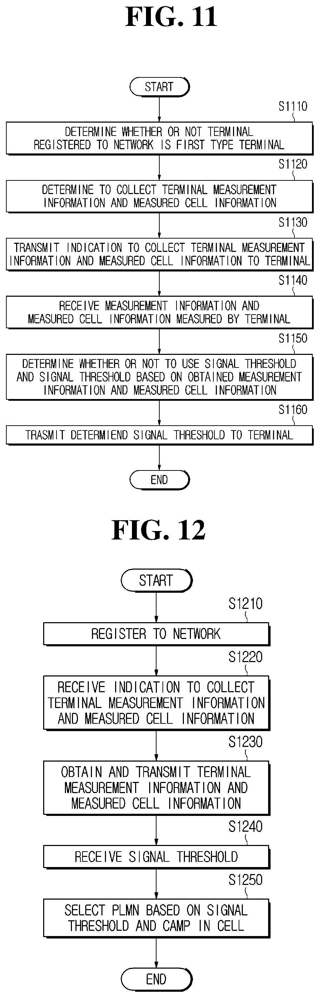

FIG. 11 is a flowchart showing a node operation applicable to the present disclosure. Referring to FIG. 11, a node may determine whether or not a terminal registered to a network is a first type (S1110). Herein, the node may be a node with an analytic function, that is, the above-described analytic function node. As an example, an analytic function node may be a network data analytics function (NWDAF). As another example, an analytic function node may be a node with artificial intelligence/machine learning (AI/ML). As an example, a node with AI/ML may perform the above-described model training based on collected measurement information and measured cell information. In addition, a node with an AI/ML may provide collected measurement information and measured cell information as an input of model inference learned based on model training. Herein, the node with an AI/ML may derive at least any one of whether or not to use a signal threshold and a value of the signal threshold itself as an output based on the input of model inference, which is the same as described above. As another example, a node may be a RAN node with an analytic function and is not limited to a specific embodiment. In addition, as an example, a first type terminal may be a stationary internet of things (IoT) terminal. That is, a node may determine whether or not a terminal is a stationary IoT terminal. As an example, based on terminal type indication information indicating a terminal type, a node may check whether or not a terminal is a stationary IoT terminal. As another example, based on terminal subscription information, a node may check whether or not a terminal is a stationary IoT terminal, which is the same as described above. Next, the node may determine to collect terminal measurement information and measured cell information (S1120) and transmit collection indication information to a terminal (S1130). As an example, the node may collect terminal measurement information and measured cell information when the terminal has frequent connection release or performs mobility registration. As a more concrete example, based on a signal intensity of a PLMN cell with a higher priority than a currently registered PLMN of a terminal, when a cell selection criterion is not satisfied for a preset time, the node may determine to collect terminal measurement information and measured cell information. Herein, as an example, the terminal measurement information is cell-measured result information and may be determined based on at least one of a reference signal received power (RSRP), a reference signal received quality (RSRQ), a signal to noise and interference ratio (SINR), a received signal strength indicator (RSSI) and other measurement information. In addition, as an example, information on a cell where measurement is performed may include at least any one of a cell ID, a PLMN ID, a frequency of a cell, a cell measurement result, a priority, a location, cell selection criterion information, Srxlev of a cell calculated by a terminal, Squal of a cell calculated by a terminal, Qrxlevmin received by a terminal, Qqualmin received by a terminal, and Qoffsettemp received by a terminal.

Next, the node may receive measurement information and measured cell information from a terminal (S1140). Herein, as an example, terminal measurement information and measured cell information may be forwarded to a node based on non access stratum (NAS) signaling on a control plane. As another example, a terminal may establish a protocol data unit (PDU) session and forward terminal measurement information and measured cell information to the node through a user plane based on the PDU session, which is the same as described above. In addition, as an example, when an indication to collect terminal measurement information and measured cell information is transmitted to a terminal, preset time information may be forwarded to the terminal together, and the terminal may perform measurement based on the preset time information and obtain terminal measurement information and measured cell information. Next, based on the obtained measurement information and measured cell information, the node may determine whether not to use a signal threshold and the signal threshold itself (S1150). In addition, based on the obtained measurement information and measured cell information, the above-described SOR-AF may also determine whether not to use a signal threshold and the signal threshold itself and is not limited to a specific embodiment.

Next, the node may transmit the determined signal threshold to a terminal (S1160). Herein, as an example, the signal threshold may be configured and indicated for each terminal based on terminal location information, which is the same as described above.

Herein, as an example, the signal threshold may be an operator controlled signal threshold per access technology based on signal level-based network selection, which is the same as described above. A terminal may select a PLMN with a high priority among public land mobile networks (PLMNs) having signals above the signal threshold and be camped in a cell within the selected PLMN.

FIG. 12 is a flowchart showing an operation of a terminal applicable to the present disclosure. Referring to FIG. 12, a terminal may be registered to a network (S1210). Herein, when a terminal is a first type terminal, a network node may determine to collect terminal measurement information and measured cell information. Herein, the network node may be a node with an analytic function, that is, the above-described analytic function node. As an example, an analytic function node may be a network data analytics function (NWDAF). As another example, an analytic function node may be a node with artificial intelligence/machine learning (AI/ML). As an example, a node with AI/ML may perform the above-described model training based on collected measurement information and measured cell information. In addition, a node with an AI/ML may provide collected measurement information and measured cell information as an input of model inference learned based on model training. Herein, the node with an AI/ML may derive at least any one of whether or not to use a signal threshold and a value of the signal threshold itself as an output based on the input of model inference, which is the same as described above. As another example, a node may be a RAN node with an analytic function and is not limited to a specific embodiment. In addition, as an example, a first type terminal may be a stationary internet of things (IoT) terminal. That is, a node may determine whether or not a terminal is a stationary IoT terminal. As an example, based on terminal type indication information indicating a terminal type, a node may check whether or not a terminal is a stationary IoT terminal. As another example, based on terminal subscription information, a node may check whether or not a terminal is a stationary IoT terminal, which is the same as described above. Next, the node may determine to collect terminal measurement information and measured cell information and transmit collection indication information to a terminal. That is, a terminal may receive an indication to collect terminal measurement information and measured cell information (S1220). As an example, the node may collect terminal measurement information and measured cell information when the terminal has frequent connection release or performs mobility registration. As a more concrete example, based on a signal intensity of a PLMN cell with a higher priority than a currently registered PLMN of a terminal, when a cell selection criterion is not satisfied for a preset time, the node may determine to collect terminal measurement information and measured cell information. Herein, as an example, the terminal measurement information is cell-measured result information and may be determined based on at least one of a reference signal received power (RSRP), a reference signal received quality (RSRQ), a signal to noise and interference ratio (SINR), a received signal strength indicator (RSSI) and other measurement information. In addition, as an example, information on a cell where measurement is performed may include at least any one of a cell ID, a PLMN ID, a frequency of a cell, a cell measurement result, a priority, a location, cell selection criterion information, Srxlev of a cell calculated by a terminal, Squal of a cell calculated by a terminal, Qrxlevmin received by a terminal, Qqualmin received by a terminal, and Qoffsettemp received by a terminal.

Next, the terminal may obtain and transmit terminal measurement information and measured cell information (S1230). Herein, as an example, terminal measurement information and measured cell information may be transmitted based on non access stratum (NAS) signaling on a control plane. As another example, a terminal may establish a protocol data unit (PDU) session and transmit terminal measurement information and measured cell information through a user plane based on the PDU session, which is the same as described above. In addition, as an example, when an indication to collect terminal measurement information and measured cell information is transmitted to a terminal, preset time information may be forwarded to the terminal together, and the terminal may perform measurement based on the preset time information and obtain terminal measurement information and measured cell information. Next, based on the obtained measurement information and measured cell information, the node may determine whether not to use a signal threshold and the signal threshold itself. Next, the node may transmit the determined signal threshold to a terminal. That is, a terminal may receive a signal threshold (S1240). Herein, as an example, the signal threshold may be configured and indicated for each terminal based on terminal location information, which is the same as described above. Herein, as an example, the signal threshold may be an operator controlled signal threshold per access technology based on signal level-based network selection, which is the same as described above. A terminal may select a PLMN with a high priority among public land mobile networks (PLMNs) having signals above the signal threshold and be camped in a cell within the selected PLMN (S 1250).

As the examples of the proposal method described above may also be included in one of the implementation methods of the present disclosure, it is an obvious fact that they may be considered as a type of proposal methods. In addition, the proposal methods described above may be implemented individually or in a combination (or merger) of some of them. A rule may be defined so that information on whether or not to apply the proposal methods (or information on the rules of the proposal methods) is notified from a base station to a terminal through a predefined signal (e.g., a physical layer signal or an upper layer signal).

The present disclosure may be embodied in other specific forms without departing from the technical ideas and essential features described in the present disclosure. Therefore, the above detailed description should not be construed as limiting in all respects and should be considered as an illustrative one. The scope of the present disclosure should be determined by rational interpretation of the appended claims, and all changes within the equivalent scope of the present disclosure are included in the scope of the present disclosure. In addition, claims having no explicit citation relationship in the claims may be combined to form an embodiment or to be included as a new claim by amendment after filing.

**Industrial Applicability**

The embodiments of the present disclosure are applicable to various radio access systems. Examples of the various radio access systems include a 3<sup>rd</sup> generation partnership project (3GPP) or 3GPP2 system.

The embodiments of the present disclosure are applicable not only to the various radio access systems but also to all technical fields, to which the various radio access systems are applied. Further, the proposed methods are applicable to mmWave and THzWave communication systems using ultrahigh frequency bands.

Additionally, the embodiments of the present disclosure are applicable to various applications such as autonomous vehicles, drones and the like.

**Claims**

1.  A method for operating a node in a wireless communication system, the method comprising:

    determining whether a terminal registered to a network is a first type terminal;
    determining to collect terminal measurement information and measured cell information based on the terminal being the first type terminal;
    transmitting an indication to collect the terminal measurement information and the measured cell information to the terminal;
    receiving the measurement information and the measured cell information which are measured by the terminal;
    determining whether to use a signal threshold and the signal threshold based on the obtained measurement information and the measured cell information; and
    transmitting the determined signal threshold to the terminal.

2.  The method of claim 1, wherein the node is a node with an analytic function, and wherein the node is a node with either a network data analytics function (NWDAF) or artificial intelligence/machine learning (AI/ML).

3.  The method of claim 1 or claim 2, wherein the signal threshold is an operator controlled signal threshold per access technology based on signal level-based network selection.

4. The method of claim 1 to claim 3, wherein the terminal selects a PLMN with a high priority among public land mobile networks (PLMNs) having signals above the signal threshold and be camped in a cell within the selected PLMN.

5. The method of claim 1, wherein the first type terminal is a stationary internet of things (IoT) terminal, and wherein the node determines whether the terminal is the first type terminal based on at least one of terminal type indication information and terminal subscription information.

6. The method of claim 1 to claim 5, wherein based on a cell selection criterion being not satisfied for a preset time based on a signal intensity of a PLMN cell with a higher priority than a currently registered PLMN of the terminal, the node determines to collect the terminal measurement information and the measured cell information and configures the signal threshold.

7. The method of claim 1, wherein the terminal measurement information is cell-measured result information and is determined based on at least one of a reference signal received power (RSRP), a reference signal received quality (RSRQ), a signal to noise and interference ratio (SINR), a received signal strength indicator (RSSI), and other measurement information.

8. The method of claim 1 to claim 7, wherein information on a cell in which the measurement is performed includes at least one of a cell ID, a PLMN ID, a frequency of the cell, a cell measurement result, a priority, a location, cell selection criterion information, Srxlev of the cell calculated by the terminal, Squal of the cell calculated by the terminal, Qrxlevmin received by the terminal, Qqualmin received by the terminal, and Qoffsettemp received by the terminal.

9. The method of claim 1 to claim 8, wherein the terminal measurement information and the measured cell information are forwarded to the node based on non access stratum (NAS) signaling on a control plane.

10. The method of claim 1 to claim 9, wherein the terminal establishes a protocol data unit (PDU) session and forwards the terminal measurement information and the measured cell information to the node through a user plane based on the PDU session.

11. The method of claim 1 to claim 10, wherein, based on the indication to collect the terminal measurement information and the measured cell information being transmitted to the terminal, preset time information is forwarded to the terminal together, and
wherein the terminal performs measurement based on the preset time information and obtains the terminal measurement information and the measured cell information.

12. The method of claim 1 to claim 11, wherein the signal threshold is configured and indicated for each terminal based on terminal location information.

13. A node operating in a wireless communication system, the node comprising:

at least transceiver;
at least one processor; and
at least one memory operably coupled with the at least one processor and storing instructions which make the at least one processor perform a specific operation when executed,
wherein the specific operation is configured to:

determine whether or not a terminal registered to a network is a first type terminal,
determine to collect terminal measurement information and measured cell information based on the terminal being the first type terminal,
control the at least one transceiver to transmit an indication to collect the terminal measurement information and the measured cell information to the terminal,
control the at least one transceiver to receive the measurement information and the measured cell information which are measured by the terminal,
determine whether to use a signal threshold and the signal threshold based on the obtained measurement information and the measured cell information, and
control the at least one transceiver to transmit the determined signal threshold to the terminal.

14. A method for operating a terminal in a wireless communication system, the method comprising:

being registered to a network;
receiving an indication to collect terminal measurement information and measured cell information;
obtaining the terminal measurement information and the measured cell information based on the indication to collect;
transmitting the measurement information and the measured cell information;
receiving a signal threshold determined based on the measurement information and the measured cell information; and
selecting a PLMN based on the signal threshold and camping in a cell.

15. A terminal operating in a wireless communication system, the terminal comprising:

at least transceiver;
at least one processor; and
at least one memory operably coupled with the at least one processor and storing instructions which make the at least one processor perform a specific operation when executed,
wherein the specific operation is configured to:

register to a network,
control the at least one transceiver to receive an indication to collect terminal measurement information and measured cell information,
obtain the terminal measurement information and the measured cell information based on the indication to collect,
control the at least one transceiver to transmit the measurement information and the measured cell information,
control the at least one transceiver to receive a signal threshold determined based on the measurement information and the measured cell information, and
select a PLMN based on the signal threshold and camp in a cell.

16. A device comprising at least one memory and at least one processor functionally coupled with the at least one memory, wherein the at least one processor controls the device to:

determine whether a terminal registered to a network is a first type terminal,
determine to collect terminal measurement information and measured cell information based on the terminal being the first type terminal,
transmit an indication to collect the terminal measurement information and the measured cell information to the terminal,
receive the measurement information and the measured cell information which are measured by the terminal,
determine whether to use a signal threshold and the signal threshold based on the obtained measurement information and the measured cell information, and
transmit the determined signal threshold to the terminal.

17. A non-transitory computer-readable medium storing at least one instruction, the medium comprising the at least one instruction executable by a processor,
wherein the at least one instruction controls the device to:

determine whether a terminal registered to a network is a first type terminal,
determine to collect terminal measurement information and measured cell information based on the terminal being the first type terminal,
transmit an indication to collect the terminal measurement information and the measured cell information to the terminal,
receive the measurement information and the measured cell information which are measured by the terminal,
determine whether to use a signal threshold and the signal threshold based on the obtained measurement information and the measured cell information, and
transmit the determined signal threshold to the terminal.

# FIG. 1

# FIG. 2

# FIG. 3

EP 4 572 413 A1

# FIG. 4

| UE | gNB | AMF | SMF |
|---|---|---|---|
| NAS | | | |
| NAS-SM | | | NAS-SM |
| NAS-MM | | NAS-MM | |
| AS | AS | | |
| RRC | RRC | | |
| PDCP | PDCP | | |
| RLC | RLC | | |
| MAC | MAC | | |
| PHY | PHY | | |

# FIG. 5

510
UE

520
VPLMN AMF

530
HPLMN UDM

540
SOR-AF

1. REGISTRATION REQUEST

2. Registration procedure initiation

Nudm_UECM Registration request

Delete "ME support of SOR-CMCI" indicator if NAS registration type is either "initial" or "emergency"

Nudm_UECM Registration response

Nudm SDM Get request

REGISTRATION ACCEPT

3a. Decision to send steering of roaming information, whether to request ACK from the UE, and how to obtain the list of preferred PLMN/access technology combinations or the secured packet.

3b. Nsoraf_SoR_Get request

3c. Nsoraf_SoR_Get response

3d. Securing information

4. Nudm_SDM_Get response

5. Nudm_SDM_Subscribe request

6. REGISTRATION ACCEPT

7. Steering of roaming information security check

REGISTRATION COMPLETE

8. If the security check fails or the UE is configured to receive steering of roaming information but did not receive it, then perform PLMN selection procedure and end the procedure

REGISTRATION COMPLETE

9. REGISTRATION COMPLETE

10. Nudm_SDM_Info_request

10a. Nsoraf_SoR_Info request

11. UE performs PLMN selection procedure if higher priority PLMN is available

## FIG. 6

| 610 | 620 | 630 | 640 |
|---|---|---|---|
| UE | AMF | HPLMN UDM | SOR-AF |

1. Nudm_ParameterProvision Update request

2. Nudm_SDM_Notification_request

3. DL_NAS_Transport

4. Steering of roaming information security check

UL_NAS_Transport

5. Nudm SDM_Info request

6. Nsoraf_SoR_Info request

# FIG. 7

710
UE

720
NG-RAN node 1

730
NG-RAN node 2

740
OAM

0. AIML model
(Optional)

1. Measurement
Configuration

2. Measurement(s)

3. UE measurement report

4. Input data for Model Training

5. Input data for
Model Training

6. Model Training

7. Model Deployment/Update

8. Input data for energy
saving model inference
from NG-RAN node 2

9. UE measurement report

10. Model Inference

11. Model Performance Feedback

12. Network Energy Saving Action

13. Feedback

14. Feedback

EP 4 572 413 A1

## FIG. 8

810
UE

820
NG-RAN node 1

830
NG-RAN node 2

0. AIML Model
(Optional)

←——— 1. Measurement Configuration ———

2. Measurement(s)

———— 3.UE measurement report ————→

4 Input data for energy
saving model training
from NG-RAN node 2

5. Model Training

6 Input data for energy
saving model inference
from NG-RAN node 2

———— 7.UE measurement report ————→

8. Model Inference

9. Network Energy Saving Action

←———————— 10. Feedback ————————

# FIG. 9

1. UE registration

If RAT Type == NB IoT, then subscribe analytic service

If UE considers stationary IoT device based on
UE subscription information, then subscribe analytic service

1. Determine gathering UE's measurement
results and measured cell
information and request to start it.

UE measurement start indication for gathering UE measurement

1. Gather UE measurement results and
cell information and report them
based on timer or event triggered.

iteration

Reporting gathered UE measurement results, UE location and
related cell information using control plan signalling

1. Analyze reported results.
2. Determine whether "Operator
controlled signal threshold per
access control" is used or not.

1. Determine whether "Operator
controlled signal threshold per
access control" is used or not.
2. Set "operator controlled threshold
per access control based on
gathered analytic information.

Operator controlled signal threshold per access control

Operator controlled signal threshold per access control

1. Enhanced PLMN selection using
"operator controlled signal.
threshold per access control"

Based analytic information,
if analytic function or SOR-AF
determines to change "operator
controlled signal threshold per
access control", the value can
be changed and delivered to the UE

910 UE
920-1 NG-RAN
920-2 NG-RAN
920-3 NG-RAN
930 OAM
940 AMF
950 UDM
960 SOR-AF
970 Analytic Function (AN or CN 위치)

EP 4 572 413 A1

30

FIG. 10

EP 4 572 413 A1

# FIG. 11

START

S1110
DETERMINE WHETHER OR NOT TERMINAL
REGISTERED TO NETWORK IS FIRST TYPE TERMINAL

S1120
DETERMINE TO COLLECT TERMINAL MEASUREMENT
INFORMATION AND MEASURED CELL INFORMATION

S1130
TRANSMIT INDICATION TO COLLECT TERMINAL MEASUREMENT
INFORMATION AND MEASURED CELL INFORMATION TO TERMINAL

S1140
RECEIVE MEASUREMENT INFORMATION AND
MEASURED CELL INFORMATION MEASURED BY TERMINAL

S1150
DETERMINE WHETHER OR NOT TO USE SIGNAL THRESHOLD
AND SIGNAL THRESHOLD BASED ON OBTAINED MEASUREMENT
INFORMATION AND MEASURED CELL INFORMATION

S1160
TRASMIT DETERMIEND SIGNAL THRESHOLD TO TERMINAL

END

# FIG. 12

START

S1210
REGISTER TO NETWORK

S1220
RECEIVE INDICATION TO COLLECT
TERMINAL MEASUREMENT INFORMATION
AND MEASURED CELL INFORMATION

S1230
OBTAIN AND TRANSMIT TERMINAL
MEASUREMENT INFORMATION AND
MEASURED CELL INFORMATION

S1240
RECEIVE SIGNAL THRESHOLD

S1250
SELECT PLMN BASED ON SIGNAL
THRESHOLD AND CAMP IN CELL

END

## INTERNATIONAL SEARCH REPORT

| International application No. |
| --- |
| **PCT/KR2023/003535** |

**A. CLASSIFICATION OF SUBJECT MATTER**

**H04W 48/18**(2009.01)i; **H04W 24/02**(2009.01)i; **H04W 24/08**(2009.01)i; **H04W 24/10**(2009.01)i; **G06N 20/00**(2019.01)i; **H04W 88/06**(2009.01)i

According to International Patent Classification (IPC) or to both national classification and IPC

**B. FIELDS SEARCHED**

Minimum documentation searched (classification system followed by classification symbols)

H04W 48/18(2009.01); H04B 17/318(2015.01); H04W 24/02(2009.01); H04W 24/08(2009.01); H04W 24/10(2009.01); H04W 36/00(2009.01); H04W 36/30(2009.01); H04W 48/16(2009.01); H04W 60/00(2009.01); H04W 72/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: NWDAF(NetWork Data Analytics Function), 타입(type), 신호 스레스홀드(signal threshold), PLMN(Public Land Mobile Network), 측정(measurement), 수집(gathering), 우선순위(priority)

**C. DOCUMENTS CONSIDERED TO BE RELEVANT**

| Category* | Citation of document, with indication, where appropriate, of the relevant passages | Relevant to claim No. |
| --- | --- | --- |
| Y | US 2022-0039046 A1 (NEC CORPORATION) 03 February 2022 (2022-02-03)<br>See paragraphs [0019], [0037]-[0056] and [0061]; and figure 1. | 1-17 |
| Y | US 2014-0112310 A1 (TELEFONAKTIEBOLAGET L M ERICSSON (PUBL)) 24 April 2014 (2014-04-24)<br>See paragraphs [0031] and [0033]; and claims 22 and 27-29. | 1-17 |
| Y | US 2017-0055201 A1 (FORD GLOBAL TECHNOLOGIES, LLC) 23 February 2017 (2017-02-23)<br>See claim 1. | 4,6 |
| A | KR 10-2020-0085089 A (LG UPLUS CORP.) 14 July 2020 (2020-07-14)<br>See paragraphs [0051]-[0067]. | 1-17 |
| A | KR 10-2020-0135867 A (CHINA ACADEMY OF TELECOMMUNICATIONS TECHNOLOGY) 03 December 2020 (2020-12-03)<br>See paragraphs [0142]-[0169]. | 1-17 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **07 June 2023** | **08 June 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/003535**

| Patent document cited in search report | | | Publication date (day/month/year) | Patent family member(s) | | | Publication date (day/month/year) |
|---|---|---|---|---|---|---|---|
| US | 2022-0039046 | A1 | 03 February 2022 | EP | 3857824 | A1 | 04 August 2021 |
| | | | | JP | 2021-535654 | A | 16 December 2021 |
| | | | | JP | 7074257 | B2 | 24 May 2022 |
| | | | | US | 11463978 | B2 | 04 October 2022 |
| | | | | WO | 2020-066890 | A1 | 02 April 2020 |
| US | 2014-0112310 | A1 | 24 April 2014 | CN | 104137606 | A | 05 November 2014 |
| | | | | CN | 104137606 | B | 10 July 2018 |
| | | | | EP | 2810480 | A1 | 10 December 2014 |
| | | | | EP | 2810480 | B1 | 30 March 2016 |
| | | | | US | 9344943 | B2 | 17 May 2016 |
| | | | | WO | 2013-115696 | A1 | 08 August 2013 |
| US | 2017-0055201 | A1 | 23 February 2017 | CN | 106470455 | A | 01 March 2017 |
| | | | | CN | 106470455 | B | 27 April 2021 |
| | | | | DE | 102016114321 | A1 | 23 February 2017 |
| | | | | US | 9894601 | B2 | 13 February 2018 |
| KR | 10-2020-0085089 | A | 14 July 2020 | None | | | |
| KR | 10-2020-0135867 | A | 03 December 2020 | CN | 110312279 | A | 08 October 2019 |
| | | | | CN | 110312279 | B | 05 March 2021 |
| | | | | EP | 3780702 | A1 | 17 February 2021 |
| | | | | US | 2021-0022022 | A1 | 21 January 2021 |
| | | | | WO | 2019-184433 | A1 | 03 October 2019 |

Form PCT/ISA/210 (patent family annex) (July 2022)